(19) Europäisches Patentamt

European Patent Office

Office européen des brevets

(11) **EP 4 390 784 B1**

(12) **EUROPEAN PATENT SPECIFICATION**

(45) Date of publication and mention of the grant of the patent:
**19.11.2025 Bulletin 2025/47**

(21) Application number: **23195673.1**

(22) Date of filing: **06.09.2023**

(51) International Patent Classification (IPC):
***G06N 99/00*** *(2019.01)*

(52) Cooperative Patent Classification (CPC):
**G06N 5/01;** G06N 7/01

(54) **DATA PROCESSING APPARATUS, DATA PROCESSING METHOD, AND PROGRAM**

DATENVERARBEITUNGSVORRICHTUNG, DATENVERARBEITUNGSVERFAHREN UND PROGRAMM

APPAREIL DE TRAITEMENT DE DONNÉES, PROCÉDÉ DE TRAITEMENT DE DONNÉES ET PROGRAMME

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2022 JP 2022206754**

(43) Date of publication of application:
**26.06.2024 Bulletin 2024/26**

(73) Proprietor: **Fujitsu Limited**
**Kawasaki-shi, Kanagawa 211-8588 (JP)**

(72) Inventors:
• **Watanabe, Yasuhiro**
**Kawasaki-shi, Kanagawa, 211-8588 (JP)**
• **Yin, Fang**
**Kawasaki-shi, Kanagawa, 211-8588 (JP)**

• **Tamura, Hirotaka**
**Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 757 908**

• **KOTARO TANAHASHI ET AL: "Application of Ising Machines and a Software Development for Ising Machines", JOURNAL OF THE PHYSICAL SOCIETY OF JAPAN., vol. 88, no. 6, 20 May 2019 (2019-05-20), JP, pages 061010, XP055749499, ISSN: 0031-9015, DOI: 10.7566/JPSJ.88.061010**

**Description**

FIELD

The embodiments discussed herein are related to a data processing apparatus, a data processing method, and a program.

BACKGROUND

As an apparatus that calculates a large-scale discrete optimization problem which a Neumann-type computer is not good at, there is an Ising apparatus that uses an Ising-type evaluation function. An evaluation function is also referred to as an energy function or the like. An Ising apparatus is also referred to as a Boltzmann machine.

The Ising apparatus converts a discrete optimization problem into an Ising model representing a behavior of spin of a magnetic body. The Ising apparatus searches for a state of the Ising model in which the value of an Ising-type evaluation function is local minimum by a Markov chain Monte Carlo method such as the simulated annealing method or the replica exchange method. The value of an Ising-type evaluation function corresponds to energy. A state in which the value of an evaluation function is the minimum value among local minimum values, is the optimal solution. By changing the sign of the evaluation function, the Ising apparatus may also search for a state in which the value of the evaluation function is local maximum. A state of an Ising model may be expressed by a combination of the values of a plurality of state variables. As the value of each state variable, 0 or 1 may be used.

For example, an Ising-type evaluation function is defined by a function of a quadratic form of the following Formula (1).

$$E(x) = -\sum_{i=1}^{N}\sum_{j>i}^{N} W_{ij} x_i x_j - \sum_{i=1}^{N} b_i x_i \qquad (1)$$

The first term on the right side adds up the products of the values of two state variables (0 or 1) and a weight value without omission and duplication for all combinations of N state variables of an Ising model. A weight value represents the degree of interaction between two state variables. $x_i$ is a state variable with an identification number i, $x_j$ is a state variable with an identification number j, and $W_{ij}$ is a weight value indicating the degree of interaction between the state variables with the identification numbers i and j. The second term on the right side calculates a sum of the products of a bias coefficient and a state variable for each identification number. $b_i$ indicates a bias coefficient for the identification number i.

An energy change amount due to a change in the value of $x_i$ ($\Delta E_i$) is expressed by the following Formula (2).

$$\Delta E_i = -\Delta x_i \left( \sum_{j}^{N} W_{ij} x_j + b_i \right) = -\Delta x_i h_i \qquad (2)$$

In Formula (2), $\Delta x_i$ is -1 when $x_i$ changes from 1 to 0, whereas $\Delta x_i$ is 1 when the state variable $x_i$ changes from 0 to 1. $h_i$ is referred to as a local field, and $\Delta E_i$ is a product of $h_i$ and a sign (+1 or -1) depending on $\Delta x_i$. For this reason, $h_i$ may also be referred to as a variable that represents an energy change amount or a variable that determines an energy change amount.

For example, processing is repeated in which a state transition is generated by updating the value of $x_i$ with an acceptance probability expressed by exp(-$\beta\Delta E_i$) ($\beta$ is a reciprocal of a parameter representing temperature) and a local field is updated.

Meanwhile, some discrete optimization problems have a constraint condition to be satisfied by a solution. For example, a knapsack problem, which is one of discrete optimization problems, has a constraint condition that the total capacity of loads that may be packed in a knapsack is equal to or smaller than the capacity of the knapsack. Such constraint condition is referred to as an inequality constraint, and may be represented by a constraint term having a value corresponding to the presence or absence of violation of the constraint condition. As constraint conditions, there are an equality constraint, an absolute value constraint, and the like in addition to an inequality constraint.

Total energy (H(x)) including constraint terms may be expressed by the following Formula (3).

$$H(x) = -\frac{1}{2}\sum_{i \in D}\sum_{j \in D} W_{ij}x_i x_j - \sum_{i \in D} b_i x_i + \sum_{k \in A}\lambda_k g(h_k) \qquad (3)$$

In Formula (3), the sum of the first term and the second term on the right side represents energy corresponding to E(x) of Formula (1), and the third term on the right side represents the magnitude (energy) of the entirety of constraint terms. D represents a set of identification numbers of state variables, k represents an identification number of a constraint term, and A represents a set of identification numbers of constraint terms. $\lambda_k$ is a predetermined positive coefficient for a constraint term with an identification number k.

When the constraint condition is an inequality constraint, $g(h_k)$ in Formula (3) may be expressed by the following Formula (4).

$$g(h_k) = \max[0, h_k], h_k = R_k - U_k = \sum_{i \in D} W_{ki}x_i - U_k \qquad (4)$$

In Formula (4), $\max[0, h_k]$ is a function that outputs a larger value of 0 and $h_k$. $R_k$ represents a consumption amount (also referred to as a resource amount) of the constraint term with the identification number k, and $U_k$ represents an upper limit of the resource amount. $W_{ki}$ is a coefficient (weight value) indicating a weight of $x_i$ in an inequality constraint with the identification number k.

In Formula (3), a total energy change amount due to a change in the value of $x_j$ ($\Delta H_j$) is expressed by the following Formula (5).

$$\Delta H_j = -h_j\Delta x_j + \sum_{k \in A}\lambda_k(g(h_k + W_{kj}\Delta x_j) - g(h_k)) \qquad (5)$$

When the constraint condition is an inequality constraint, the total energy change amount due to a change in the value of $x_j$ ($\Delta H_j$) may be expressed by the following Formula (6) instead of Formula (5).

$$\Delta H_j = -h_j\Delta x_j$$
$$+ \sum_{i=1}^{M}\lambda_i(\max[0, h_i + a_{ij}\Delta x_j - C_{ui}] - \max[0, h_i - C_{ui}]) \qquad (6)$$

In Formula (6), $a_{ij}$ is a coefficient indicating a weight of $x_j$ in an inequality constraint with the identification number i, and corresponds to the above $W_{ki}$. $C_{ui}$ is an upper limit value in the inequality constraint with the identification number i, and corresponds to the above $U_k$. M represents the number of constraint terms.

An acceptance probability of accepting a change in the value of $x_j$ may be expressed as $A_j = \min[1, \exp(-\beta\Delta H_j)]$. $\min[1, \exp(-\beta\Delta H_j)]$ is a function that outputs a smaller value of 1 and $\exp(-(3\Delta H_j)$.

Formula (3) is not a function of a quadratic form such as Formula (1), but is a discontinuous function of a linear form. In order to allow an inequality constraint to be handled by the Ising apparatus, it is conceivable to convert a discontinuous function of a linear form into a quadratic form. However, in a case where a discrete optimization problem is calculated by using a constraint term of an inequality constraint converted into a quadratic form, there is a case in which it is difficult to find a solution by the Ising apparatus due to the complexity of processing or the like.

Accordingly, a technique has been proposed in which solution-finding is performed by the Ising apparatus using a constraint term of an inequality constraint such as that described above remaining in the linear form.

An optimization apparatus has been proposed in which a decision variable having a continuous value or an integer value among decision variables of a mixed integer programming problem is discretized, the mixed integer programming problem is converted into a combinatorial optimization problem, and a quantum computing device is caused to calculate an optimal solution of the combinatorial optimization problem.

A method has also been proposed in which a penalty function for an arbitrary constraint is defined, and a constraint satisfaction problem is solved by optimization without a constraint using the penalty function. A method has also been proposed in which weights of a discretized deep neural network are quantized in machine learning.

Japanese Laid-open Patent Publication No. 2020-204928, Japanese Laid-open Patent Publication No.

2020-113190, U.S. Patent Application Publication No. 2015/0205759, and U.S. Patent Application Publication No. 2019/0354842 are disclosed as related art.

EP 3 757 908 A1 relates to an optimization device and an optimization method.

Kotaro Tanahashi ET AL: "Application of Ising Machines and a Software Development for Ising Machines", JOURNAL OF THE PHYSICAL SOCIETY OF JAPAN., vol. 88, no. 6, 20 May 2019 relates to an online advertisement optimization.

[TECHNICAL PROBLEMS]

A method of finding a solution by using a constraint term of an inequality constraint remaining in a linear form has a problem that the efficiency of arithmetic operation is not sufficiently increased.

In one aspect, an object of the present disclosure is to enable an increase in the efficiency of arithmetic operation.

[ADVANTAGEOUS EFFECTS OF INVENTION]

In one aspect, the efficiency of arithmetic operation may be increased.

SUMMARY

The present invention is defined by the subject-matter of independent claims. Preferred embodiments are given by the subject-matter of dependent claims.

According to an aspect of the embodiments, a data processing apparatus that searches for a combination of values of a plurality of state variables in which a value calculated by using an Ising-type evaluation function that includes the plurality of state variables is local minimum or local maximum, the data processing apparatus includes a storage unit that stores total energy that is a sum of a constraint term that has a value that corresponds to presence or absence of violation of a constraint condition and a value of the evaluation function, values of the plurality of state variables, a first weight value between the plurality of state variables, a second weight value between at least some state variables of the plurality of state variables and the constraint condition, a first local field that represents a first change amount of the total energy in a case where a value of each of the plurality of state variables changes, and a second local field that is used for determination of a constraint violation amount for the constraint condition; and a processing unit that repeats processing of determining whether a change in a value of a first state variable among the plurality of state variables is allowed based on the first local field, and processing of, when it is determined that a change in a value of the first state variable is allowed, updating the first local field based on the first weight value, updating the second local field based on the second weight value between the first state variable and the constraint condition, and further updating the first local field based on a first quantized local field obtained by quantizing the second local field before update and a second quantized local field obtained by quantizing the second local field after update.

BRIEF DESCRIPTION OF DRAWINGS

FIG. 1 is a diagram explaining a data processing apparatus of a first embodiment;
FIG. 2 is a diagram illustrating an example of a constraint term;
FIG. 3 is a diagram illustrating a first example of quantization of a second local field;
FIG. 4 is a diagram illustrating a second example of quantization of a second local field;
FIG. 5 is a diagram illustrating an example of hardware of a data processing apparatus of a second embodiment;
FIG. 6 is a diagram illustrating an example of the functions of the data processing apparatus;
FIG. 7 is a diagram illustrating an example of a restoration unit and an $h_i$ calculation unit;
FIG. 8 is a diagram illustrating an example of an $h_k$ calculation unit;
FIG. 9 is a diagram illustrating an example of an energy correction processing unit;
FIG. 10 is a diagram illustrating an example of a timing chart;
FIG. 11 is a flowchart illustrating an example of overall processing;
FIG. 12 is a flowchart illustrating an example of decision variable flip selection processing;
FIG. 13 is a diagram illustrating an example of the functions of a data processing apparatus of a third embodiment;
FIG. 14 is a diagram illustrating an example of an $h_i$ calculation unit;
FIG. 15 is a diagram illustrating an example of a constraint term calculation unit;
FIG. 16 is a diagram illustrating an example of a timing chart;
FIG. 17 is a flowchart illustrating an example of overall processing;

FIG. 18 is a diagram illustrating an example of the functions of a data processing apparatus of a fourth embodiment;

FIG. 19 is a diagram illustrating an example of an $h_i$ calculation unit;

FIG. 20 is a diagram illustrating the functions of a data processing apparatus of comparative example 1;

FIG. 21 is a diagram illustrating an example of prediction error occurrence in the data processing apparatus of comparative example 1;

FIG. 22 is a diagram illustrating an example of the functions of a data processing apparatus of comparative example 2 (part 1); and

FIG. 23 is a diagram illustrating an example of the functions of the data processing apparatus of comparative example 2 (part 2).

DESCRIPTION OF EMBODIMENTS

Hereinafter, the present embodiments will be described with reference to the drawings.

[First Embodiment]

A first embodiment will be described.

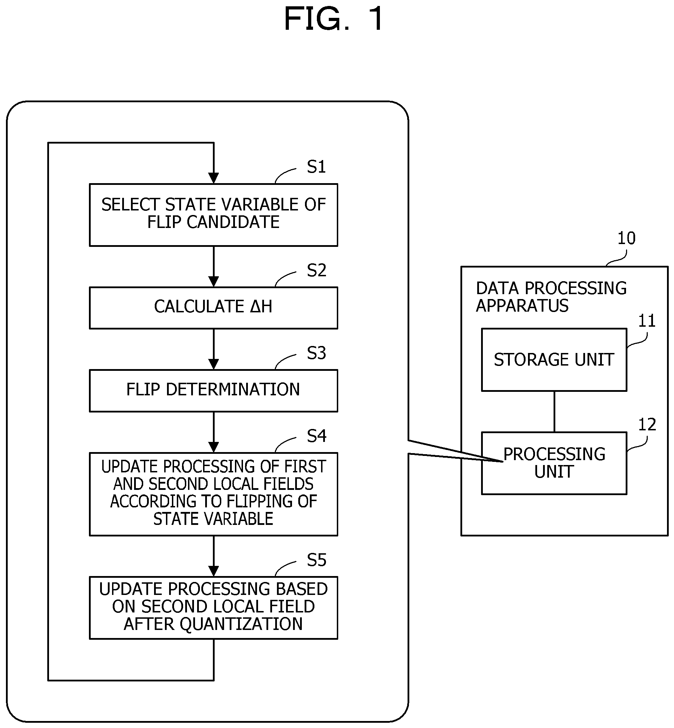

FIG. 1 is a diagram explaining a data processing apparatus of the first embodiment.

A data processing apparatus 10 of the first embodiment includes a storage unit 11 and a processing unit 12.

For example, the storage unit 11 is a volatile storage device that is an electronic circuit such as a dynamic random-access memory (DRAM) or a non-volatile storage device that is an electronic circuit such as a hard disk drive (HDD) or a flash memory. The storage unit 11 may include an electronic circuit such as a static random-access memory (SRAM) or a register.

The storage unit 11 stores H(x), the values of a plurality of (hereinafter, N) state variables ($x_i$), a first weight value between N $x_i$ ($W_{ij}$ described above), and a second weight value ($W_{ki}$) between any one of N $x_i$ and each of M constraint conditions. N is an integer of two or larger. M is an integer of 1 or larger. $W_{ij} = W_{ji}$. $W_{ii} = 0$. The storage unit 11 does not have to store a second weight value related to a state variable that does not affect any of M constraint conditions (second weight value having the value of 0).

i is an identification number representing any one of N $x_i$, and k is an identification number representing any one of M constraint terms (or constraint conditions). An identification number is also referred to as an index.

The storage unit 11 stores a first local field ($h_i$) representing a change amount of H(x) in a case where each value of N $x_i$ changes ($\Delta H_i$), and a second local field ($h_k$) used for determination of a constraint violation amount for each of M constraint conditions. A state variable may also be referred to as a decision variable. Since each second local field corresponds to each constraint term, for example, each constraint condition, a second weight value may also be referred to as a weight value between a state variable and a constraint condition.

Total energy H(x) stored in the storage unit 11 may be expressed as H(x) = E(x) + P(x). E(x) is a sum of the first term and the second term on the right side of the above-described Formula (3).

Hereinafter, energy P(x) of the entirety of M constraint terms corresponding to M constraint conditions is expressed by Formula (7).

$$P(x) = \sum_{k \in A} \lambda_k g(h_k) \tag{7}$$

P(x) corresponds to the entirety of one or more constraint terms, and indicates the magnitude of the entirety of one or more constraint terms. For this reason, P(x) may be referred to as an evaluation function of constraint terms.

$\lambda_k$ is a proportional coefficient related to the constraint term of identification number = k, and represents a weight of the constraint term. $\lambda_k$ may be a different value for each constraint term. For example, $g(h_k)$ may be a Max function such as that expressed by Formula 4. $g(h_k)$ may be referred to as a penalty function.

A second local field ($h_k$) may be expressed by the following Formula (8).

$$h_k = \sum_{i \in D, k \in A} W_{ki} x_i + b_k \tag{8}$$

In Formula (8), $b_k$ is a coefficient related to the constraint condition of identification number = k. When the constraint condition of identification number = k is an inequality constraint, the first term on the right side of Formula (8)

corresponds to $R_k$ of the above-described Formula (4), and + $b_k$ corresponds to - $U_k$ of Formula (4). For this reason, as described above, it may be said that $h_k$ is a difference between $R_k$ and $U_k$, for example, a variable used for determination of a constraint violation amount.

$\Delta H_i$ in a case where the value of a certain state variable ($x_i$) changes may be expressed by the following Formula (9) using a constraint term.

$$\Delta H_i = - \left( \sum_{j \in D} W_{ij} x_j + b_i \right) \Delta x_i \qquad (9)$$
$$+ \sum_{k \in A} \lambda_k (g(h_k + W_{ki} \Delta x_i) - g(h_k))$$

$g(h_k + W_{ki}\Delta x_i)$ - $g(h_k)$ in Formula (9) represents a change amount of the value of a constraint term in the case where the value of a certain state variable ($x_i$) changes.

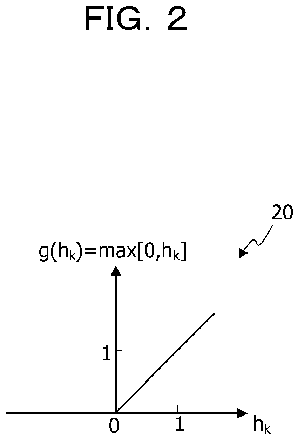

FIG. 2 is a diagram illustrating an example of a constraint term.

The vertical axis of graph 20 represents the magnitude of $g(h_k)$, and the horizontal axis represents $h_k$.

Graph 20 illustrates $g(h_k) = \max[0, h_k]$, which is an example of a constraint term. Such constraint term is a rectified linear unit (ReLU) type function. When $h_k$ has changed to $h_k + W_{ki}\Delta x_i$ due to a change in the value of $x_i$, the change amount of the value of a constraint term is expressed as $g(h_k + W_{ki}\Delta x_i)$ - $g(h_k)$.

The data processing apparatus 10 of the present embodiment uses, as the first local field ($h_i$), a value reflecting not only the change amount of E(x) due to a change in the value of $x_i$ but also the change amount of P(x). Such $h_i$ may be expressed by the following Formula (10).

$$h_i = \left( \sum_{j \in D} W_{ij} x_j + b_i \right) - \sum_{k \in A} \lambda_k \Delta g(h_k, W_{ki} \Delta x_i) \qquad (10)$$

In Formula (10), $\Delta g(h_k, W_{ki}\Delta x_i)$ is expressed by the following Formula (11), and is an amount that may be calculated from $x_i$, $h_k$, and $W_{ki}$.

$$\Delta g(h_k, W_{ki} \Delta x_i) = \Delta x_i [g(h_k + W_{ki} \Delta x_i) - g(h_k)] \qquad (11)$$

By using $h_i$ as in Formula (10), $\Delta H_i$ is expressed as $\Delta H_i$ = -$h_i \Delta x_i$.

According to Formulae (10) and (11), normally, it is sufficient that $h_i$ is updated by the following Formula (12) according to a change in $h_k$ with respect to a change in the value of $x_j$.

$$h_i \leftarrow h_i - \Delta x_i \lambda_k \left[ g(h_k + W_{ki} \Delta x_i) - g(h_k) \right.$$
$$\left. -g \left( h_k^{(old)} + W_{ki} \Delta x_i \right) + g \left( h_k^{(old)} \right) \right] \qquad (12)$$

In Formula (12), $h_k^{(old)}$ represents $h_k$ before the update. When i = j, since $h_i$ does not change, update does not have to be performed.

However, in the method of updating the first local field by using the second local field as it is as in Formula (12), in a case where the number of state variables is large, a case where the number of constraint terms is large, or the like, there is a possibility that an arithmetic operation cost associated with the update of the first local field increases.

Accordingly, the processing unit 12 reflects the change amount of the value of a constraint term in the first local field ($h_i$) based on quantized local fields obtained by quantizing the second local field ($h_k$) before and after the update. A quantized local field may be an approximate value of the second local field, and is a code of a predetermined number of bits smaller than the number of bits of the original local field associated with the approximate value. In a case where the code is used as a quantized local field, the processing unit 12 restores an approximate value of the original local field based on the code, and reflects the change amount of the value of the constraint term calculated based on the approximate value in the first local field. The quantized local field corresponding to the second local field before the update is referred to as a first quantized local field. The quantized local field corresponding to the second local field after the update is referred to as a second quantized local field.

In a case where a quantized local field is used, $h_i$ is updated by the following Formula (13) when $i \neq j$.

$$h_i \leftarrow h_i - \Delta x_i \lambda_k \left[ g(\hat{h}_k + W_{ki}\Delta x_i) - g(\hat{h}_k) \right.$$
$$\left. - g\left( \hat{h}_k^{(old)} + W_{ki}\Delta x_i \right) + g\left( \hat{h}_k^{(old)} \right) \right] \tag{13}$$

Since the second local field includes an error due to quantization, the update of $h_i$ in a case where the update of $h_k$ occurs due to the update of $x_j$ is performed by the following Formula (14) when $i = j$.

$$h_i \leftarrow h_i - \Delta x_i \lambda_k \left[ g(\hat{h}_k + W_{ki}\Delta x_i) - g(\hat{h}_k) \right.$$
$$\left. + g\left( \hat{h}_k^{(old)} - W_{ki}\Delta x_i \right) - g\left( \hat{h}_k^{(old)} \right) \right] \tag{14}$$

$h_k{}^\wedge$ indicates a variable in which an index k is added to the lower right of a character obtained by adding a hat symbol to h. For example, $h_k{}^{\wedge(old)}$ indicates an approximate value of the local field $h_k$ before the update, which corresponds to the first quantized local field. For example, $h_k{}^\wedge$ indicates an approximate value of the local field $h_k$ after the update, which corresponds to the second quantized local field.

For example, in the quantization of the second local field, the processing unit 12 clips the maximum value and the minimum value of the second local field with a value based on the maximum value of the weight value corresponding to each constraint condition, and quantizes the values between the maximum and minimum values with a predetermined number of bits. For example, each value included in a certain range of the second local field is associated with one quantized local field corresponding to the range. A more specific method of quantization of the second local field will be described later.

Since there is approximation to the second local field, for example, total energy H is corrected by Formula (15).

$$H \leftarrow H + \lambda_k \left[ g(h_k + W_{kj}\Delta x_j) - g(h_k) \right.$$
$$\left. - g\left( \hat{h}_k + W_{kj}\Delta x_j \right) + g(\hat{h}_k) \right] \tag{15}$$

However, as will be described later, a method is also conceivable in which the first local field and the change amount of a penalty term based on a quantized local field for calculation of $\Delta H$ for flip determination are separately held in the storage unit 11 so that correction of total energy H based on Formula (15) is not performed.

The storage unit 11 may further store a bias coefficient ($b_i$), a proportional coefficient ($\lambda_k$), and a coefficient related to a constraint condition ($b_k$). The storage unit 11 may store various types of data such as calculation conditions under which the processing unit 12 executes the data processing method to be described later. In a case where the processing unit 12 executes a part or all of processing of the data processing method to be described later by software, a program for executing the processing is stored in the storage unit 11.

For example, the processing unit 12 in FIG. 1 may be realized by a processor such as a central processing unit (CPU), a graphics processing unit (GPU), a digital signal processor (DSP), an application-specific integrated circuit (ASIC), or a field-programmable gate array (FPGA).

For example, the processing unit 12 searches for a state in which H(x) is local minimum. A state in which the value of H(x) is the minimum value among local minimum values, is the optimal solution. By changing the signs of E(x) and P(x), the processing unit 12 may also search for a state in which the value of H(x) is local maximum (in this case, a state in which the value of H(x) is the maximum value is the optimal solution).

FIG. 1 illustrates an example of a flow of processing by the processing unit 12.

In this example, the values based on the initial value of $x_1$ to $x_N$ are stored in the storage unit 11 as H(x), $h_i$, $h_k$, and $x_k$.

The processing unit 12 selects, from N state variables, a state variable of a candidate whose value is to be changed (hereinafter referred to as a flip candidate) (step S1). For example, the processing unit 12 selects state variables of flip candidates at random or in a predetermined order.

The processing unit 12 calculates $\Delta H$ in a case where the value of the selected state variable changes (step S2). For example, when $x_i$ is selected, $\Delta H_i$ may be calculated by the formula of $\Delta H_i = -h_i\Delta x_i$ based on $h_i$ as described above.

Next, the processing unit 12 determines whether a change in the value of the state variable of a flip candidate is allowed (whether flipping may be performed) based on a result of comparison between $\Delta H$ and a predetermined value (step S3). Hereinafter, this determination processing is referred to as flip determination processing.

For example, the predetermined value is a noise value obtained based on a random number and a value of temperature parameter. For example, $\log(\text{rand}) \times T$, which is an example of a noise value obtained based on a uniform random number (rand) equal to or larger than 0 and equal to or smaller than 1 and a temperature parameter (T), may be used as the predetermined value. In this case, when $-\Delta H_i \geq \log(\text{rand}) \times T$, the processing unit 12 determines that a change in the value of the state variable of a flip candidate is allowed (flipping may be performed). When $-\Delta H_i < \log(\text{rand}) \times T$, the processing unit 12 does not allow a change in the value of the state variable of a flip candidate.

When it is determined that flipping may be performed, the processing unit 12 performs the next update processing of the first local field ($h_i$) and the second local field ($h_k$) (step S4).

For example, when it is determined that $x_j$ may be flipped, the processing unit 12 updates $h_i$ by adding $\Delta hi = W_{ij}\Delta x_j$ to the original $h_i$ for each of the N state variables. At the same time, the processing unit 12 flips $x_j$ for which it is determined that flipping may be performed. When $i = j$, since $W_{ii} = 0$ and $h_i$ does not change, update does not have to be performed. When it is determined that $x_j$ may be flipped, the processing unit 12 updates $h_k$ by adding $\Delta h_k = Wk_j\Delta x_j$ to $h_k$ for which the second weight value ($W_{kj}$) between itself and $x_j$ is not 0.

For example, when the first local field ($h_i$) is $h_1$ to $h_N$ and the second local field ($h_k$) is $h_{N+1}$ to $h_{N+M}$, the processing unit 12 may update $h_i$ and $h_k$ by parallel calculation with a parallelism of N + M.

The processing unit 12 further updates $h_i$ by Formulae (13) and (14) based on the first quantized local field $h_k^{\wedge(old)}$ and the second quantized local field $h_k^\wedge$ obtained by quantizing the second local field ($h_k$) before and after the update (step S5). In step S5, for example, the processing unit 12 also corrects total energy H by Formula (15). The first quantized local field $h_k^{\wedge(old)}$ is a value after quantization of the second local field $h_k$ before the update. The second quantized local field $h_k^\wedge$ is a value after quantization of the second local field $h_k$ after the update.

The processing unit 12 repeats the above processing of steps S1 to S5.

In step S5, when there is no change in the second quantized local field $h_k^\wedge$ with respect to the first quantized local field $h_k^{\wedge(old)}$, the processing unit 12 may omit the update of $h_i$ by Formulae (13) and (14). However, when correction of total energy H by Formula (15) is performed, the processing unit 12 performs the correction every time in step S5.

Although an example in which the processing of steps S2 to S4 is performed by selecting a state variable of a flip candidate one by one from the N state variables has been described in the above description, the processing of steps S2 to S3 may be performed in parallel for a plurality of (for example, all of the N) state variables. In this case, when there is a plurality of state variables for which a change in the value is allowed, the processing unit 12 selects, randomly or in accordance with a predetermined rule, a state variable of which the value is to be changed.

For example, in a case where the simulated annealing method is performed, the processing unit 12 decreases the value of the temperature parameter (T) described above in accordance with a predetermined temperature parameter change schedule every time the flip determination processing for a state variable is repeated a predetermined number of times. The processing unit 12 outputs a state obtained when the flip determination processing is repeated a predetermined number of times (or when a predetermined T is reached), as a calculation result of a discrete optimization problem. The processing unit 12 may cause the storage unit 11 to hold the total energy and the state obtained when the energy is the minimum energy up to that time. In this case, the processing unit 12 may output, as a calculation result, a state corresponding to the minimum energy stored after the flip determination processing is repeated a predetermined number of times.

In a case where the processing unit 12 performs the replica exchange method, the processing unit 12 repeats the above processing of steps S1 to S4 in each of a plurality of replicas in which different values of T are set. The processing unit 12 performs replica exchange every time the flip determination processing is repeated a predetermined number of times. For example, the processing unit 12 selects two replicas having adjacent values of T, and exchanges the values of state variables between the two selected replicas with a predetermined exchange probability based on an energy difference between the replicas or a difference in the values of T. The values of T may be exchanged between the two replicas instead of the values of state variables. Alternatively, the processing unit 12 holds the total energy and the state obtained when the energy is the minimum energy up to that time. The processing unit 12 outputs, as a calculation result, a state corresponding to the minimum energy in all replicas among the minimum energies stored after the above flip determination processing is repeated a predetermined number of times in each replica.

By using the replica exchange method, a state changes even on the low temperature side where a state hardly changes (even for a replica for which the value of T is small), and the possibility that a good solution may be found in a short time increases. The replica exchange method is also referred to as the parallel tempering method or the like.

Next, an example of quantization of the second local field will be described.

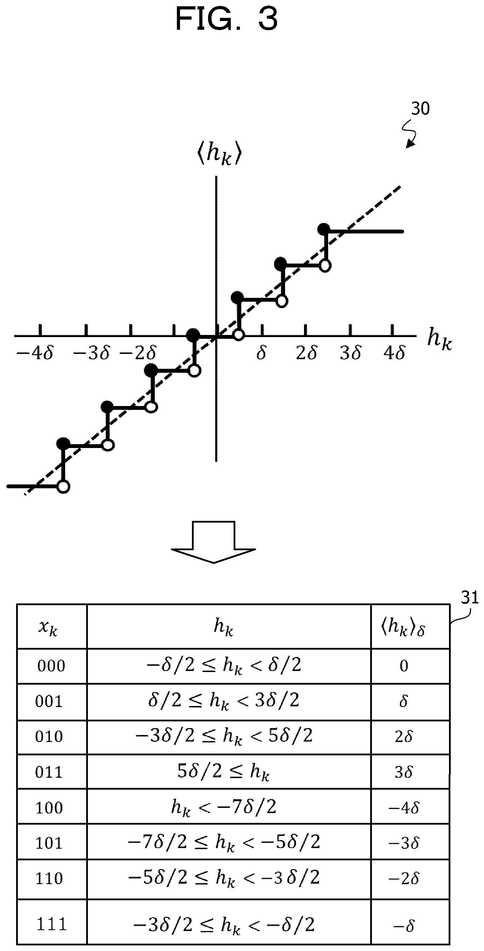

FIG. 3 is a diagram illustrating a first example of quantization of the second local field.

Graph 30 illustrates an example in which the second local field $h_k$ is converted into a quantized local field by clipping the second local field $h_k$ with the maximum value $3\delta$ and the minimum value $-4\delta$ and approximating between the values in three bits, for example, eight values. Table 31 exemplifies a relationship between the second local field $h_k$, the quantized local field $h_k{}^\wedge$, and a three-bit code $x_k$ corresponding to the quantized local field $h_k{}^\wedge$.

For example, when $-\delta/2 \leq h_k < \delta/2$, $h_k{}^\wedge = \langle h_k \rangle_\delta = 0$, and the code $x_k = 000$ is associated therewith. When $\delta/2 \leq h_k < 3\delta/2$, $h_k{}^\wedge = \delta$, and the code $x_k = 001$ is associated therewith. As described above, a correspondence relationship between the code $x_k$, the second local field $h_k$, and the quantized local field $h_k{}^\wedge$ is defined in advance by table 31. The storage unit 11 may hold table 31. The processing unit 12 may generate the quantized local field $h_k{}^\wedge$ and the code $x_k$ by quantizing the second local field $h_k$ based on table 31.

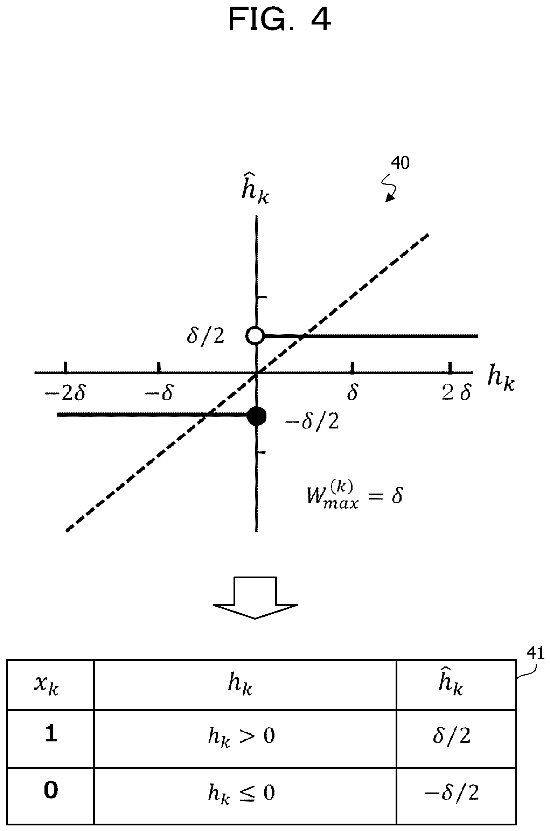

FIG. 4 is a diagram illustrating a second example of quantization of the second local field.

Graph 40 illustrates an example in which the second local field $h_k$ is converted into a quantized local field by clipping the second local field $h_k$ with the maximum value $W_{max}{}^{(k)} = \delta$ and the minimum value $-\delta$ of a weight value corresponding to a constraint condition, and approximating between the values in one bit, for example, two values. Table 41 exemplifies a relationship between the second local field $h_k$, the quantized local field $h_k{}^\wedge$, and a one-bit code $x_k$ corresponding to the quantized local field $h_k{}^\wedge$.

For example, when $h_k > 0$, $h_k{}^\wedge = \delta/2$, and the code $x_k = 1$ is associated therewith. When $h_k \leq 0$, $h_k{}^\wedge = -\delta/2$, and the code $x_k = 0$ is associated therewith. The storage unit 11 may hold table 41. The processing unit 12 may generate the quantized local field $h_k{}^\wedge$ and the code $x_k$ by quantizing the second local field $h_k$ based on table 41.

Although the approximate value $h_k{}^\wedge$ of the second local field has been described as an example of a quantized local field in the description of FIGs. 3 and 4, a code corresponding to the approximate value $h_k{}^\wedge$ ($x_k$ in this example) may be considered as an example of a quantized local field as described above.

According to the data processing apparatus 10 and data processing method described above, the efficiency of arithmetic operation may be increased. For example, in step S5 in FIG. 1, when there is no change in $h_k{}^\wedge$ from $h_k{}^{\wedge(old)}$, the update of $h_i$ by Formulae (13) and (14) may be omitted. For this reason, the arithmetic operation cost related to the update of $h_i$ may be reduced as compared with a case where $h_i$ is updated every time the original $h_k$ is updated. As a result, the solution finding performance of the data processing apparatus 10 may be improved. For example, the data processing apparatus 10 may execute the solution finding arithmetic operation at high speed. The data processing apparatus 10 may increase the possibility of reaching a better solution in a relatively short time. Since a local field corresponding to a constraint condition is reflected in the total energy as a relatively large value by being multiplied by the coefficient $\lambda_k$, the influence on solution-finding is very small even when a quantized value is used as the local field.

The processing unit 12 may separately include a first arithmetic operator that performs arithmetic operation of the first local field $h_i$ and a second arithmetic operator that performs arithmetic operation of the second local field $h_k$. In this case, when information on $h_k{}^\wedge$ is transmitted from the second arithmetic operator to the first arithmetic operator, the second arithmetic operator may transmit the code $x_k$ based on table 31 or table 41. The first arithmetic operator may acquire $h_k{}^\wedge$ from the code $x_k$ based on table 31 or table 41, and update $h_i$. By doing so, the amount of information output from the second arithmetic operator to the first arithmetic operator is reduced. For this reason, complication of wiring inside the processing unit 12 is suppressed, and the cost of circuit mounting inside the processing unit 12 is reduced. As a result, a larger-scale parallelization arithmetic operation may be performed.

[Second Embodiment]

Next, a second embodiment will be described.

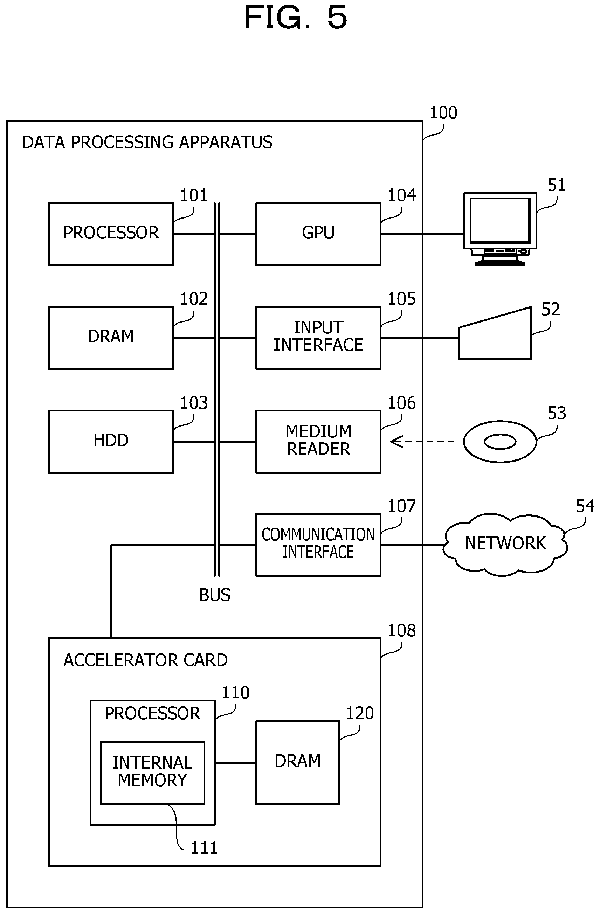

FIG. 5 is a diagram illustrating an example of hardware of a data processing apparatus of the second embodiment.

A data processing apparatus 100 includes a processor 101, a DRAM 102, an HDD 103, a GPU 104, an input interface 105, a medium reader 106, a communication interface 107, and an accelerator card 108. These units included in the data processing apparatus 100 are coupled to a bus inside the data processing apparatus 100.

The processor 101 is an arithmetic device that executes instructions of a program. For example, the processor 101 is a CPU. The processor 101 loads at least some of the programs and data stored in the HDD 103 into the DRAM 102, and executes the programs. The processor 101 may include a plurality of processor cores. The data processing apparatus 100 may include a plurality of processors. The processing to be described below may be executed in parallel by using a plurality of processors or processor cores. A set of a plurality of processors may be referred to as a "multiprocessor" or simply referred to as a "processor".

The DRAM 102 is a volatile semiconductor memory that temporarily stores a program to be executed by the processor 101 and data to be used for arithmetic operation by the processor 101. The data processing apparatus 100 may include a memory of a type other than the RAM and may include a plurality of memories.

The HDD 103 is a non-volatile storage device that stores data and programs of software such as an operating system (OS), middleware, and application software. The data processing apparatus 100 may include other types of storage devices such as a flash memory or a solid-state drive (SSD), and may include a plurality of non-volatile storage devices.

The GPU 104 outputs an image to a display 51 coupled to the data processing apparatus 100 in accordance with an instruction from the processor 101. As the display 51, an arbitrary type of a display such as a cathode ray tube (CRT) display, a liquid crystal display (LCD), a plasma display, or an organic electro-luminescence (OEL) display may be used.

The input interface 105 acquires an input signal from an input device 52 coupled to the data processing apparatus 100, and outputs the input signal to the processor 101. As the input device 52, a pointing device such as a mouse, a touch panel, a touchpad, or a trackball, a keyboard, a remote controller, a button switch, or the like may be used. A plurality of types of input devices may be coupled to the data processing apparatus 100.

The medium reader 106 is a reading device that reads the programs and data recorded in a recording medium 53. As the recording medium 53, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 106 copies the programs and data read from the recording medium 53 to another recording medium such as the DRAM 102 or the HDD 103. For example, the read programs are executed by the processor 101. The recording medium 53 may be a portable-type recording medium, and may be used to distribute programs and data. The recording medium 53 and the HDD 103 may be referred to as a computer-readable recording medium.

The communication interface 107 is coupled to a network 54, and communicates with another information processing apparatus via the network 54. The communication interface 107 may be a wired communication interface coupled to a wired communication device such as a switch or a router, or may be a wireless communication interface coupled to a wireless communication device such as a base station or an access point.

The accelerator card 108 is a hardware accelerator that searches for a solution of a discrete optimization problem. A discrete optimization problem is expressed by Formula (3) indicating the total energy of an Ising model. Formula (3) includes a constraint term of a linear form representing a constraint condition. The number of constraint conditions, for example, constraint terms may be one or more.

The accelerator card 108 includes a processor 110 and a DRAM 120. For example, the processor 110 is a GPU, a DSP, an ASIC, an FPGA, or the like. The processor 110 includes an internal memory 111. For example, the internal memory 111 is an SRAM. The DRAM 120 stores data to be used for processing by the processor 110.

The processor 110 is an example of the processing unit 12 of the first embodiment. The internal memory 111 or the DRAM 120 is an example of the storage unit 11 of the first embodiment. However, the following functions of the data processing apparatus 100 may be realized by the processor 101 executing a program stored in the DRAM 102. In this case, the processor 101 is an example of the processing unit 12, and the cache memory included in the processor 101 or the DRAM 102 is an example of the storage unit 11.

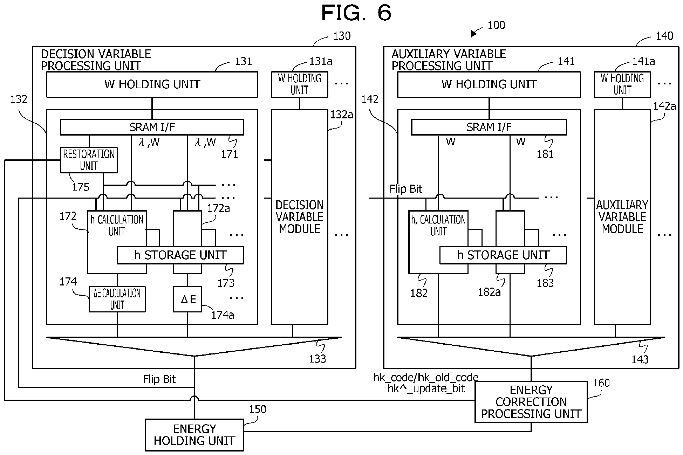

FIG. 6 is a diagram illustrating an example of the functions of the data processing apparatus.

The data processing apparatus 100 includes a decision variable processing unit 130, an auxiliary variable processing unit 140, an energy holding unit 150, and an energy correction processing unit 160. The decision variable processing unit 130, the auxiliary variable processing unit 140, the energy holding unit 150, and the energy correction processing unit 160 are realized by an electronic circuit such as an FPGA or an ASIC. The auxiliary variable processing unit 140, the energy holding unit 150, and the energy correction processing unit 160 may be realized by the GPU executing a program stored in the DRAM 120. Alternatively, the auxiliary variable processing unit 140, the energy holding unit 150, and the energy correction processing unit 160 may be realized by the CPU 101 executing a program stored in the DRAM 102.

The decision variable processing unit 130 holds the values of N decision variables ($x_i$) and performs processing on the decision variables. Decision variables correspond to the state variables of the first embodiment. The decision variable processing unit 130 includes W holding units 131, 131a, ..., decision variable modules 132, 132a, ..., and a selection unit 133.

The W holding units 131, 131a, ... hold the weight values between decision variables and between a decision variable and a constraint condition used in the decision variable modules 132, 132a, ..., respectively.

Each of the decision variable modules 132, 132a, ... calculates a local field and $\Delta E$ for the decision variables belonging to one group obtained by dividing the N decision variables. $\Delta E$ indicates a total energy change amount used for flip determination of a decision variable.

The decision variable module 132 includes an SRAM interface (I/F) 171, $h_i$ calculation units 172, 172a, ..., an h storage unit 173, $\Delta E$ calculation units 174, 174a, ..., and a restoration unit 175. Other decision variable modules including the decision variable module 132a have the functions similar to those of the decision variable module 132.

The SRAM I/F 171 reads the weight value corresponding to a flipped decision variable from the W holding unit 131, and supplies the weight value to the $h_i$ calculation units 172, 172a, .... The SRAM I/F 171 also reads a coefficient $\lambda$ indicating a weight for each constraint term held in the internal memory 111, and supplies the coefficient $\lambda$ to the $h_i$ calculation units 172, 172a, ....

In response to flipping of any decision variable, the $h_i$ calculation units 172, 172a, ... calculate a local field ($h_i$) of the decision variable based on Formulae (13) and (14). One $h_i$ calculation unit corresponds to one decision variable. As indicated in Formulae (13) and (14), an approximate value based on a quantized local field obtained by quantizing a local field corresponding to a constraint term is used for the calculation of a local field of decision variable. The $h_i$ calculation units 172, 172a, ... save the calculated $h_i$ in the h storage unit 173. The $h_i$ calculation units 172, 172a, ... supply the calculated $h_i$ to the $\Delta E$ calculation units 174, 174a, ..., respectively.

The h storage unit 173 stores $h_i$ for each of a plurality of replicas.

The $\Delta E$ calculation units 174, 174a, ... calculate $\Delta E$ based on $h_i$ calculated by the $h_i$ calculation units 172, 172a, ..., respectively, and supply $\Delta E$ to the selection unit 133. For $x_i$, $\Delta E_i = \Delta H_i = -h_i \Delta x_i$.

The restoration unit 175 restores an approximate value of a local field before the quantization based on the code of a predetermined number of bits indicating the quantized local field supplied from the energy correction processing unit 160, and supplies the approximate value to the $h_i$ calculation units 172, 172a, ....

The selection unit 133 performs flip determination based on $\Delta E$ supplied from each of the decision variable modules 132, 132a, ..., and selects a decision variable $x_j$ to be flipped. A method similar to the method exemplified in the first embodiment is used for the flip determination. The selection unit 133 supplies the index of the decision variable to be flipped (flip bit) to each $h_i$ calculation unit of the decision variable modules 132, 132a, .... The selection unit 133 inverts the value of the decision variable $x_j$ to be flipped among the decision variables held in the decision variable processing unit 130. In FIG. 6, illustration of a decision variable holding unit that holds the value of each decision variable in the decision variable processing unit 130 is omitted. For example, the decision variable holding unit is realized by the internal memory 111.

The selection unit 133 outputs $\Delta E_j$ corresponding to the decision variable to be flipped to the energy holding unit 150, and updates the total energy held in the energy holding unit 150.

The auxiliary variable processing unit 140 holds the values of M auxiliary variables ($x_k$) corresponding to the constraint terms, and performs processing on the auxiliary variables. For example, $x_k$ is used for detecting whether a constraint condition is satisfied. For example, the ReLU type function in FIG. 2 is used as a constraint term. For example, when $h_k > 0$, $g(h_k) > 0$ and a constraint condition violation occurs. Therefore, $x_k = 1$ when $h_k > 0$ and $x_k = 0$ when $h_k \leq 0$. However, in the present embodiment, the data processing apparatus 100 does not have to hold the value of auxiliary variable $x_k$.

The auxiliary variable processing unit 140 includes W holding units 141, 141a, ..., auxiliary variable modules 142, 142a, ..., and a selection unit 143.

The W holding units 141, 141a, ... hold the weight value between a decision variable and a constraint condition used in the auxiliary variable modules 142, 142a, ..., respectively.

Each of the auxiliary variable modules 142, 142a, ... calculates a local field for the auxiliary variables belonging to one group obtained by dividing the M auxiliary variables.

The auxiliary variable module 142 includes an SRAM I/F 181, $h_k$ calculation units 182, 182a, ..., and an h storage unit 183. Other auxiliary variable modules including the auxiliary variable module 142a have the functions similar to those of the auxiliary variable module 142.

The SRAM I/F 181 reads the weight value corresponding to the flipped decision variable $x_j$ from the W holding unit 141, and supplies the weight value to the $h_k$ calculation units 182, 182a, ....

In response to the flipping of the decision variable $x_j$, the $h_k$ calculation units 182, 182a, ... calculate a code hk_code indicating the local field ($h_k$) of an auxiliary variable and a quantized local field obtained by quantizing $h_k$. One $h_k$ calculation unit corresponds to one auxiliary variable. The $h_k$ calculation units 182, 182a, ... save the calculated $h_k$ in the h storage unit 183. The $h_k$ calculation units 182, 182a, ... supply the calculated $h_k$ and $h_k\hat{}$ to the selection unit 143. At this time, the $h_k$ calculation units 182, 182a, ... also supply a code hk_old_code indicating the local field $h_k^{(old)}$ before update and the quantized local field thereof to the selection unit 143.

The h storage unit 183 stores $h_k$ for each of a plurality of replicas.

The selection unit 143 sequentially selects index k of a constraint condition to be calculated, and supplies a code indicating a local field and a quantized local field corresponding to the index k to the energy correction processing unit 160.

The energy holding unit 150 holds the total energy corresponding to the current state of an Ising model.

The energy correction processing unit 160 performs correction for the total energy held in the energy holding unit 150 according to a change in the local field of an auxiliary variable. In the correction, the influence of the quantized local field reflected in the local field on the decision variable side is corrected by Formula (15).

The energy correction processing unit 160 outputs, to the decision variable processing unit 130, the code hk_code of a predetermined number of bits corresponding to the quantized local field of $h_k$ and the code hk_old_code of a predetermined number of bits corresponding to the quantized local field of $h_k^{(old)}$. For example, a very small number of bits compared to the normal number of bits for a local field, such as three bits or one bit as described above, is determined in advance as the predetermined number of bits.

The energy correction processing unit 160 outputs, to the decision variable processing unit 130, information hk^_update_bit indicating index k for which hk_code has changed with respect to hk_old_code. Hk^_update_bit is used for

determination of whether $h_i$ is updated for the constraint term of index k by the decision variable processing unit 130.

For example, a storage area of the internal memory 111 is used for the W holding units 131 and 141 and the h storage units 173 and 183.

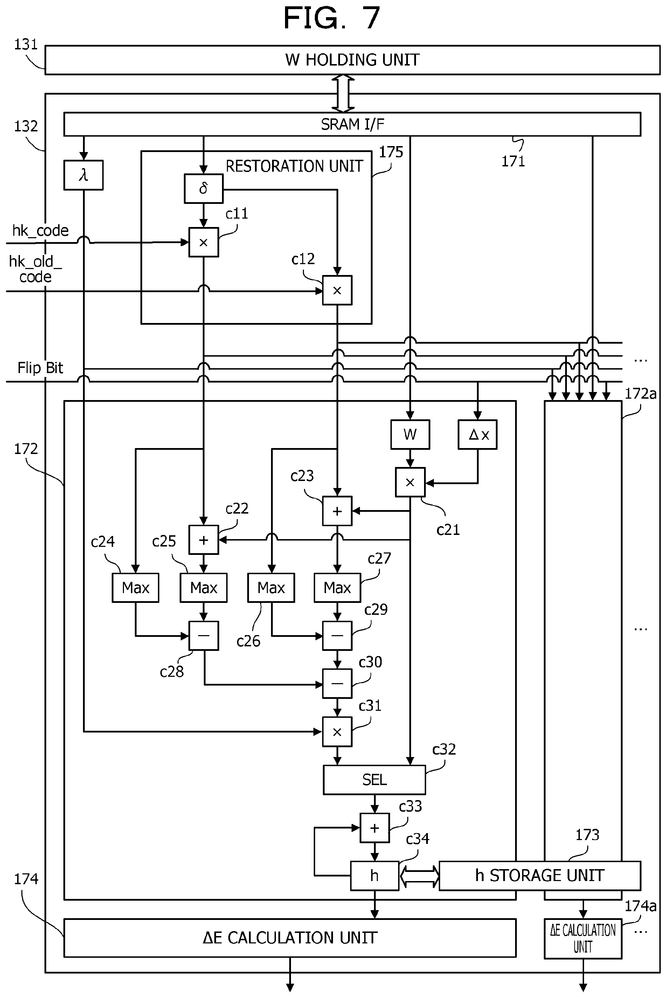

FIG. 7 is a diagram illustrating an example of a restoration unit and an $h_i$ calculation unit.

The restoration unit 175 includes multipliers c11 and c12.

The multiplier c11 restores $h_k{}^{\wedge}$ by multiplying a constant $\delta$ indicating quantization accuracy supplied from the SRAM I/F 171 by the code hk_code supplied from the energy correction processing unit 160, and supplies $h_k{}^{\wedge}$ to the $h_i$ calculation units 172, 172a, ....

The multiplier c12 restores $h_k{}^{\wedge(old)}$ by multiplying the constant $\delta$ by the code hk_old_code supplied from the energy correction processing unit 160, and supplies $h_k{}^{\wedge(old)}$ to the $h_i$ calculation units 172, 172a, ....

Although an example in which the approximate values $h_k{}^{\wedge}$ and $h_k{}^{\wedge(old)}$ of a local field before quantization are restored by multiplying $\delta$ and a code as described above is described in the present embodiment, the values may be restored by another method of arithmetic operation.

The $h_i$ calculation unit 172 includes multipliers c21 and c31, adders c22, c23, and c33, Max arithmetic operators c24, c25, c26, and c27, subtractors c28, c29, and c30, a selector (SEL) c32, and a register c34.

The multiplier c21 multiplies $\Delta x_j$ corresponding to the decision variable $x_j$ to be flipped by the weight value $W_{ij}$ between the decision variable and decision variable $x_i$ corresponding to the $h_i$ calculation unit 172, and outputs a multiplication result. The multiplier c21 multiplies the change amount $\Delta x_i$ of the value of the decision variable $x_i$ corresponding to the $h_i$ calculation unit 172 by the weight value $W_{ki}$ between $x_i$ and the constraint term of index k, and outputs a multiplication result. By the multiplication result of $\Delta x_j$ and $W_{ij}$ being supplied to the adder c33 by the selector c32, $\Delta h_i = W_{ij}\Delta x_j$ is added to the original $h_i$. By $\delta h_i = -\lambda_k(\Delta g(h_k{}^{\wedge}, W_{ki}\Delta x_i) - \Delta g(h_k{}^{\wedge(old)}, W_{ki}\Delta x_i))$ calculated based on the multiplication result of $\Delta x_i$ and $W_{ki}$ being supplied to the adder c33 by the selector c32, $\delta h_i$ is added to the $h_i$. However, when $i = j$ for index j of a decision variable to be flipped, $\delta h_i = -\lambda_k(\Delta g(h_k{}^{\wedge}, W_{ki}\Delta x_i) + \Delta g(h_k{}^{\wedge(old)}, W_{ki}\Delta x_i))$ as indicated by Formula (14). In the drawings, inversion of a sign may be omitted by indicating subtraction in a Formula by an adder, or the like.

The adder c22 adds $h_k{}^{\wedge}$ supplied from the multiplier c11 and $W_{ki}\Delta x_i$ supplied from the multiplier c21, and outputs an addition result.

The adder c23 adds $h_k{}^{\wedge(old)}$ supplied from the multiplier c12 and $W_{ki}\Delta x_i$ supplied from the multiplier c21, and outputs an addition result.

The Max arithmetic operator c24 compares $h_k{}^{\wedge}$ supplied from the multiplier c11 with 0, and outputs the larger one.

The Max arithmetic operator c25 compares $h_k{}^{\wedge} + W_{ki}\Delta x_i$ supplied from the adder c22 with 0, and outputs the larger one.

The Max arithmetic operator c26 compares $h_k{}^{\wedge(old)}$ supplied from the multiplier c12 with 0, and outputs the larger one.

The Max arithmetic operator c27 compares $h_k{}^{\wedge(old)} + W_{ki}\Delta x_i$ supplied from the adder c23 with 0, and outputs the larger one.

The subtractor c28 calculates and outputs a difference between an output value of the Max arithmetic operator c24 and an output value of the Max arithmetic operator c25.

The subtractor c29 calculates and outputs a difference between an output value of the Max arithmetic operator c26 and an output value of the Max arithmetic operator c27.

The subtractor c30 calculates and outputs a difference between an output value of the subtractor c28 and an output value of the subtractor c29.

The multiplier c31 multiplies the coefficient $\lambda_k$ supplied from the SRAM I/F 171 by an output value of the subtractor c30, and supplies a multiplication result to the selector c32. An output value of the multiplier c31 corresponds to $\delta h_i$.

The selector c32 switches a value to be output to the adder c33 between $W_{ij}\Delta x_j$ and $\delta h_i$.

The adder c33 adds the value supplied from the selector c32 to $h_i$ held in the register c34, and updates $h_i$ in the register c34.

The register c34 holds $h_i$ and supplies $h_i$ to the $\Delta E$ calculation unit 174. When arithmetic operation is performed for a plurality of replicas, $h_i$ for each replica is held in the h storage unit 173, and $h_i$ of the replica for which arithmetic operation is performed is read from the h storage unit 173 to the register c34.

Other $h_i$ calculation units including the $h_i$ calculation unit 172a are realized by the circuit configuration similar to that of the $h_i$ calculation unit 172.

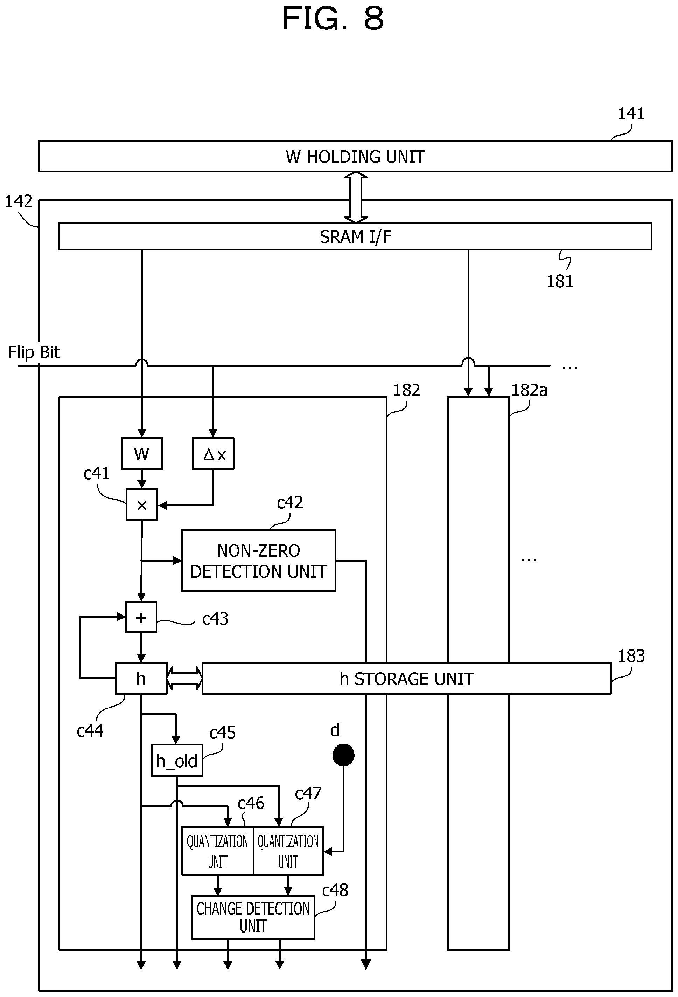

FIG. 8 is a diagram illustrating an example of an $h_k$ calculation unit.

The auxiliary variable module 142 includes a multiplier c41, a non-zero detection unit c42, an adder c43, a register c44, a register c45, quantization units c46 and c47, and a change detection unit c48.

The multiplier c41 multiplies the change $\Delta x_j$ of the decision variable $x_j$ to be flipped by $W_{kj}$ corresponding to the $h_k$ calculation unit 182, and outputs a multiplication result. The non-zero detection unit c42 detects whether the multiplication result of the multiplier c41 is non-zero, and outputs a flag indicating a detection result of whether the multiplication result is non-zero.

The adder c43 adds the output value $W_{kj}\Delta x_j$ of the multiplier c41 to $h_k$ held in the register c44.

The register c44 holds $h_k$ and supplies $h_k$ to the selection unit 143 and the register c45. When arithmetic operation is performed for a plurality of replicas, $h_k$ for each replica is held in the h storage unit 183, and $h_k$ of the replica for which arithmetic operation is performed is read from the h storage unit 183 to the register c44.

The register c45 holds and outputs $h_k^{(old)}$ (= h_old) which is $h_k$ before addition of $W_{kj}\Delta x_j$ by the adder c43.

The quantization unit c46 generates a code hk_code corresponding to $h_k{}^\wedge$ by quantizing $h_k$ held in the register c44 based on a constant $\delta$ that determines quantization accuracy, and supplies the code hk_code to the change detection unit c48.

The quantization unit c47 generates a code hk_old_code corresponding to $h_k{}^{\wedge(old)}$ by quantizing $h_k^{(old)}$ held in the register c45 based on the constant $\delta$, and supplies the code hk_old_code to the change detection unit c48.

The change detection unit c48 detects a change in quantized local field based on the codes hk_code and hk_old_code, and supplies hk^_update_bit, which is information indicating index k for which the change is detected, to the selection unit 143. At the same time, the change detection unit c48 supplies the codes hk_code and hk_old_code to the selection unit 143.

Other $h_k$ calculation units including the $h_k$ calculation unit 182a are realized by the circuit configuration similar to that of the $h_k$ calculation unit 182.

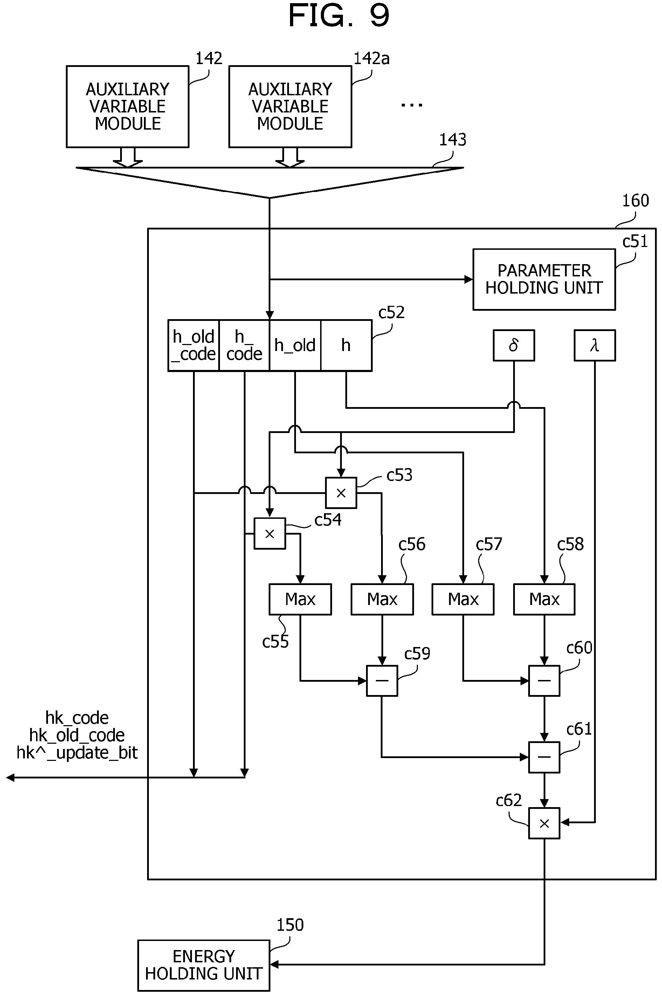

FIG. 9 is a diagram illustrating an example of the energy correction processing unit.

The energy correction processing unit 160 receives an output of the $h_k$ calculation unit corresponding to the index k to be processed selected by the selection unit 143 among the $h_k$ calculation units of each of the auxiliary variable modules 142, 142a, ..., and performs correction processing of total energy for each index k.

The energy correction processing unit 160 includes a parameter holding unit c51, a register c52, multipliers c53, c54, and c62, Max arithmetic operators c55, c56, c57, and c58, and subtractors c59, c60, and c61.

The parameter holding unit c51 holds the constant $\delta$ and $\lambda_k$.

The register c52 holds and outputs the codes hk_old_code and hk_code supplied from the selection unit 143 and the local fields $h_k$ and $h_k^{(old)}$ (= hk_old). In FIG. 9, h_old_code indicates a set of hk_old_code for each k, and h_code indicates a set of hk_code for each k. h_old indicates a set of $h_k^{(old)}$ for each k, and h indicates a set of $h_k$ for each k.

The multiplier c53 restores $h_k^{\wedge(old)}$ by multiplying $\delta$ by h_old_code, and outputs $h_k^{\wedge(old)}$.

The multiplier c54 restores $h_k{}^\wedge$ by multiplying $\delta$ by h_code, and outputs $h_k{}^\wedge$.

The Max arithmetic operator c55 compares the output value $h_k{}^\wedge$ of the multiplier c54 with 0, and outputs the larger one.

The Max arithmetic operator c56 compares the output value $h_k^{\wedge(old)}$ of the multiplier c53 with 0, and outputs the larger one.

The Max arithmetic operator c57 compares $h_k^{(old)}$ with 0, and outputs the larger one.

The Max arithmetic operator c58 compares $h_k$ with 0, and outputs the larger one.

The subtractor c59 calculates and outputs a difference between an output value of the Max arithmetic operator c55 and an output value of the Max arithmetic operator c56.

The subtractor c60 calculates and outputs a difference between an output value of the Max arithmetic operator c57 and an output value of the Max arithmetic operator c58.

The subtractor c61 calculates and outputs a difference between an output value of the subtractor c59 and an output value of the subtractor c60.

The multiplier c62 multiplies an output value of the subtractor c61 by $\lambda_k$ and supplies a multiplication result to the energy holding unit 150, thereby correcting the total energy held in the energy holding unit 150.

In this way, the energy correction processing unit 160 performs the correction processing of total energy based on Formula (15). The energy correction processing unit 160 supplies the codes hk_old_code, hk_code, and hk^_update_bit supplied from the selection unit 143 to the decision variable processing unit 130.

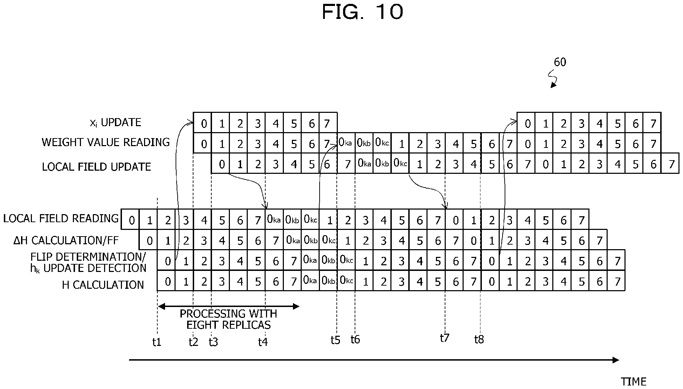

FIG. 10 is a diagram illustrating an example of a timing chart.

Timing chart 60 illustrates an example of the operation of the data processing apparatus 100 in a case where pipeline processing is performed using eight replicas. 0 to 7 are replica numbers. FIG. 10 illustrates the details of processing for the replica with replica number = 0, and other replicas are illustrated in a simplified manner.

For the replica with replica number = 0, flip determination processing is performed (t1), update of $x_i$ is performed according to the result of processing, and reading of weight values for update of $h_i$ and $h_k$ is performed (t2). The update of $h_i$ and $h_k$ is performed (t3). When three $h_k$ (represented as 0ka, 0kb, and 0kc in FIG. 10) are updated, reading, generation of $h_k{}^\wedge$ and $h_k^{\wedge(old)}$, and update detection of $h_k{}^\wedge$ are performed in this order for the three $h_k$ (t4 to t5). At this time, the correction of total energy H based on Formula (15) is also performed.

Reading of a corresponding $W_{ki}$ is performed in order from $h_k{}^\wedge$ for which update detection has ended (t5), and update of $h_i$ based on $\delta h_i$ is performed (t6). As described above, for index j of a decision variable to be flipped, when $i \neq j$, $\delta h_i = -\lambda_k(\Delta g(h_k{}^\wedge, W_{ki}\Delta x_i) - \Delta g(h_k^{\wedge(old)}, W_{ki}\Delta x_i))$, and when i = j, $\delta h_i = -\lambda_k(\Delta g(h_k{}^\wedge, W_{ki}\Delta x_i) + \Delta g(h_k^{\wedge(old)}, W_{ki}\Delta x_i))$.

After that, the updated $h_i$ is read (t7), and calculation of $\Delta H$, flip determination processing, and calculation of H(x) are performed (t8).

Next, a procedure of the processing of the data processing apparatus 100 will be described.

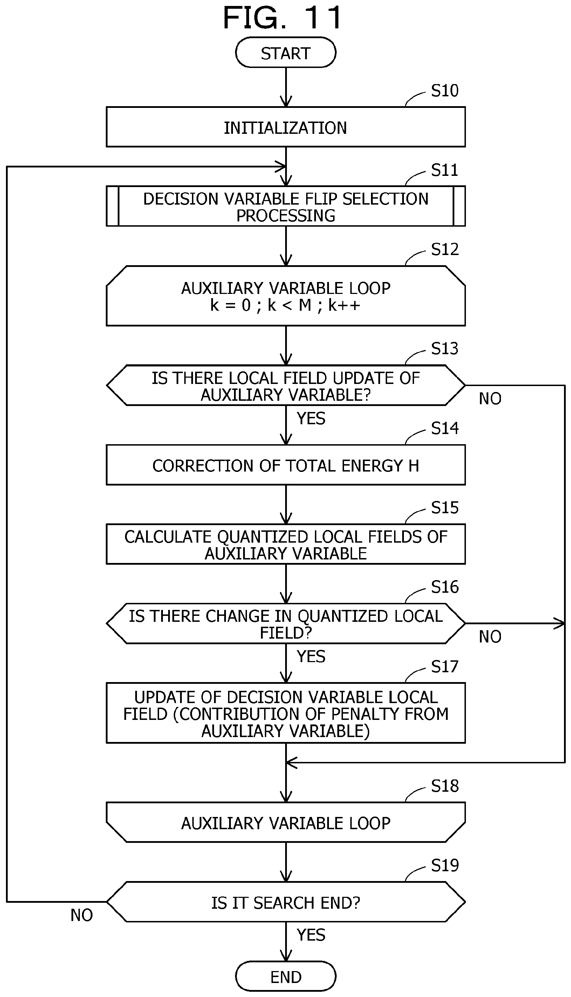

FIG. 11 is a flowchart illustrating an example of overall processing.

Hereinafter, an example in which a search by the simulated annealing method is performed will be described as an example.

(S10) The decision variable processing unit 130 and the auxiliary variable processing unit 140 perform initialization. In the initialization, an initial value of the N decision variables, problem information, and calculation conditions (for example, information on a temperature parameter used in the simulated annealing method, or the like) are set. The initial value of the N decision variables is held in the predetermined decision variable holding unit of the decision variable processing unit 130. The weight values included in the problem information are divided for each corresponding group of decision variables and auxiliary variables, and are held in the W holding units 131, 131a, ... and the W holding units 141, 141a, ....

In the initialization, an initial value of $h_k$ and an initial value of $h_i$ are calculated based on the initial value of the N decision variables and the problem information, the initial value of N $h_i$ is held in the h storage unit 173, and the initial value of M $h_k$ is held in the h storage unit 183. An initial value of H(x) is calculated based on the initial value of the N decision variables and the problem information, and is held in the energy holding unit 150.

(S11) The decision variable processing unit 130 performs decision variable flip selection processing. Details of the decision variable flip selection processing will be described later.

(S12) k is incremented one by one from the index k = 0 of constraint condition, and steps S13 to S17 are repeatedly executed while k < M. This repeated processing is referred to as an auxiliary variable loop.

(S13) The non-zero detection unit c42 of the auxiliary variable processing unit 140 determines whether there is local field update of auxiliary variable. When there is local field update of auxiliary variable, the processing proceeds to step S14. When there is no local field update of auxiliary variable, the processing proceeds to step S18.

(S14) The energy correction processing unit 160 performs the correction of total energy H based on Formula (15).

(S15) The quantization units c46 and c47 of the auxiliary variable processing unit 140 calculate codes hk_code and hk_old_code indicating the quantized local fields of the auxiliary variable $x_k$, respectively.

(S16) The change detection unit c48 of the auxiliary variable processing unit 140 determines whether there is a change in quantized local field based on the codes hk_code and hk_old_code. When hk_code and hk_old_code are different, for example, when there is a change in quantized local field, the processing proceeds to step S17. When hk_code and hk_old_code are the same, for example, when there is no change in quantized local field, the processing proceeds to step S18. When there is no change, the processing of step S17 in the decision variable processing unit 130 is omitted based on hk^_update_bit supplied from the auxiliary variable processing unit 140 to the decision variable processing unit 130.

(S17) The $h_i$ calculation units 172, 172a, ... of the decision variable processing unit 130 restore the approximate values $h_k^{\wedge}$ and $h_k^{\wedge(old)}$ of the original local field based on hk_code and hk_old_code supplied from the auxiliary variable processing unit 140, and update the local field $h_i$ of the decision variable $x_i$. Accordingly, the contribution of penalty from an auxiliary variable in Formulae (13) and (14) is reflected in $h_i$.

(S18) When the auxiliary variable loop ends, the processing proceeds to step S19.

(S19) The decision variable processing unit 130 determines whether it is search end. For example, search end is determined when temperature value T used as a temperature parameter in the simulated annealing method reaches the final temperature value. When it is not search end, temperature value T is updated, and the processing proceeds to step S11. When it is search end, the overall processing ends. When it is search end, the decision variable processing unit 130 outputs a calculation result. For example, the calculation result is the total energy and the state obtained when the energy is the minimum energy up to that time.

The execution order of step S14 and step S15 may be reversed.

As indicated in step S13, it is sufficient that the data processing apparatus 100 executes the processing of auxiliary variable loop of step S14 and subsequent steps only when there is local field update of auxiliary variable, and the processing may be omitted when there is no local field update of auxiliary variable. For example, in the data processing apparatus 100, the efficiency of arithmetic operation is also increased by the non-zero detection unit c42.

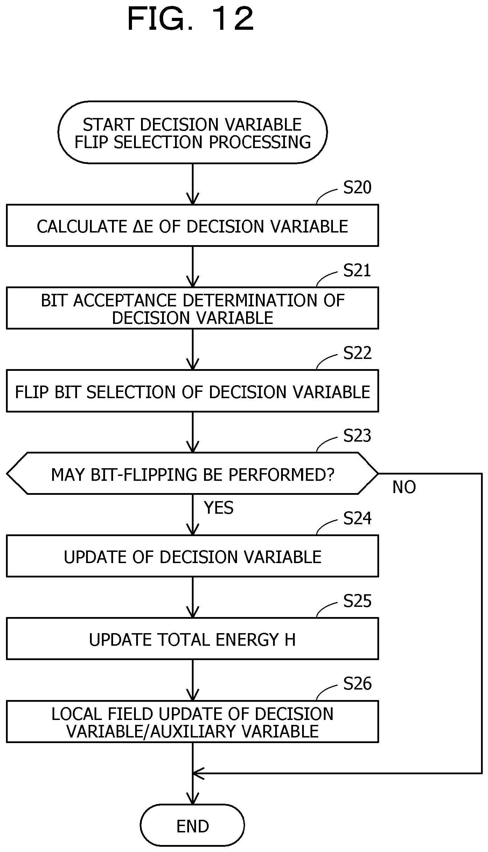

FIG. 12 is a flowchart illustrating an example of the decision variable flip selection processing.

The decision variable flip selection processing corresponds to step S11.

(S20) The ΔE calculation units 174, 174a, ... of the decision variable processing unit 130 calculate $\Delta E_i$ of the decision variable $x_i$ based on the local field $h_i$. $\Delta E_i = \Delta H_i = -h_i \Delta x_i$.

(S21) The selection unit 133 performs bit acceptance determination of decision variable. In the bit acceptance determination, it is determined whether a decision variable of a flip candidate may be flipped based on a result of comparison between ΔE corresponding to the decision variable of a flip candidate and a predetermined value. The predetermined value is a noise value obtained based on a random number value and a value of temperature parameter (temperature value T) (for example, log(rand) × T).

(S22) The selection unit 133 performs flip bit selection from the decision variables for which it is determined in step S21 that flipping may be performed. For example, the selection unit 133 randomly selects one decision variable for which it is determined that flipping may be performed.

(S23) The selection unit 133 determines whether bit-flipping may be performed. When bit-flipping may be performed, the processing proceeds to step S24. When bit-flipping may not be performed, the decision variable flip selection processing ends. For example, bit-flipping may be performed when any of the decision variables has been selected in step S22, and bit-flipping may not be performed when no decision variable has been selected.

(S24) The selection unit 133 updates the decision variable held in the decision variable processing unit 130. Accordingly, the value of the decision variable selected in step S22 is updated.

(S25) The selection unit 133 updates total energy H held in the energy holding unit 150 by $\Delta E = \Delta H$ corresponding to the flipped decision variable.

(S26) The decision variable processing unit 130 and the auxiliary variable processing unit 140 update the local fields $h_i$ and $h_k$, respectively. For example, the $h_i$ calculation units 172, 172a, ... of the decision variable processing unit 130 update $h_i$ by adding $\Delta h_i = W_{ij}\Delta x_j$ to $h_i$. The $h_k$ calculation units 182, 182a, ... of the auxiliary variable processing unit 140 update $h_k$ by adding $\Delta h_k = W_{kj}\Delta x_j$ to $h_k$. The decision variable flip selection processing ends.

According to the data processing apparatus 100 of the second embodiment, when there is no change in quantized local field in step S16 in FIG. 11, the update of $h_i$ by Formulae (13) and (14) in step S17 may be omitted. For this reason, the arithmetic operation cost related to the update of $h_i$ may be reduced. As a result, the solution finding performance of the data processing apparatus 100 may be improved. For example, the data processing apparatus 100 may execute the solution finding arithmetic operation at high speed. The data processing apparatus 100 may increase the possibility of reaching a better solution in a relatively short time.

In a case where the decision variable processing unit 130 and the auxiliary variable processing unit 140 are realized by separate arithmetic operators, for example, separate electronic circuits, it is sufficient that the auxiliary variable processing unit 140 transmits a code of a relatively small number of bits indicating a quantized local field to the decision variable processing unit 130. Accordingly, the amount of information output from the auxiliary variable processing unit 140 to the decision variable processing unit 130 is reduced. For this reason, complication of wiring inside the processor 110 realized by an FPGA or the like is suppressed, and the cost of circuit mounting is reduced. As a result, a larger-scale parallelization arithmetic operation may be performed.

[Third Embodiment]

Next, a third embodiment will be described. Items different from the above-described second embodiment will be mainly described, and description of the common items will be omitted.

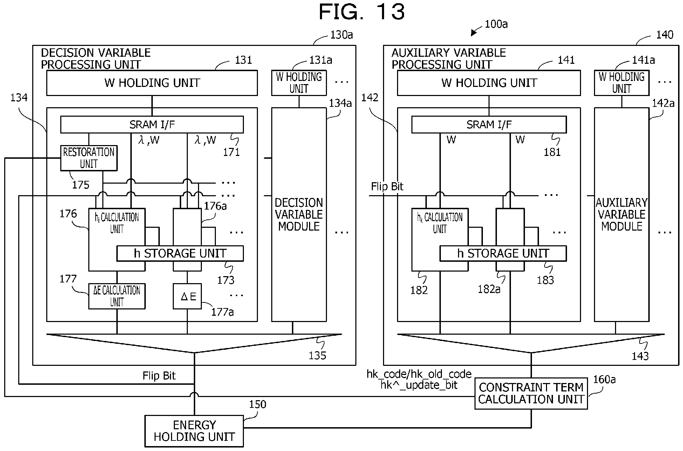

FIG. 13 is a diagram illustrating an example of the functions of a data processing apparatus of the third embodiment.

A data processing apparatus 100a of the third embodiment illustrates an example in which energy correction based on Formula (15) is not performed by separately holding a local field of decision variable and a change amount of constraint term to be applied to the local field of decision variable for calculating an energy change to be used for flip determination processing.

The data processing apparatus 100a of the third embodiment is realized by hardware similar to that of the data processing apparatus 100 of the second embodiment illustrated in FIG. 5. The data processing apparatus 100a has the functions similar to those of the data processing apparatus 100. However, the data processing apparatus 100a is different from the data processing apparatus 100 in that a decision variable processing unit 130a is provided instead of the decision variable processing unit 130 and a constraint term calculation unit 160a is provided instead of the energy correction processing unit 160.

The auxiliary variable processing unit 140 holds the auxiliary variable $x_k$ that is a binary variable corresponding to a constraint term. However, in the drawing, illustration of an auxiliary variable holding unit that holds the auxiliary variable $x_k$ in the auxiliary variable processing unit 140 is omitted. For example, the auxiliary variable holding unit is realized by the internal memory 111.

The decision variable processing unit 130a includes the W holding units 131, 131a, ..., decision variable modules 134, 134a, ..., and a selection unit 135. The W holding units 131, 131a, ... are the same as those in the second embodiment.

The decision variable module 134 includes the SRAM I/F 171, the h storage unit 173, the restoration unit 175, $h_i$ calculation units 176, 176a, ..., and $\Delta E$ calculation units 177, 177a, .... The SRAM I/F 171, the h storage unit 173 and the restoration unit 175 are the same as those in the second embodiment. However, as described above, the h storage unit 173 separately holds a local field of decision variable and a change amount of constraint term. Other decision variable modules including the decision variable module 134a have the functions similar to those of the decision variable module 134.

The $h_i$ calculation unit 176 separately calculates and holds a local field of decision variable and a change amount of constraint term to be applied to the local field of decision variable. The local field $h_i$ of the third embodiment is expressed by Formula (16).

$$h_i = \sum_{j \in D} W_{ij} x_j + b_i - \sum_{k \in A} \lambda_k W_{ki} x_k \tag{16}$$

When $x_p$ that is a decision variable or an auxiliary variable has changed to 1 - $x_p$, $h_i$ is updated by Formula (17). Index p is an index of a decision variable or an auxiliary variable.

$$h_i \leftarrow h_i + \lambda_p W_{ip} \Delta x_p \tag{17}$$

However, when p ε D, $\lambda_p$ = 1. For example, information on $\Delta x_k$ is supplied from the auxiliary variable processing unit 140 to each $h_i$ calculation unit.
For p ε D, Formula (18) is used for the update of total energy.

$$H \leftarrow H - \lambda_p h_p \Delta x_p \quad for \quad p \in D \tag{18}$$

For p ε A, Formula (19) is used for the update of total energy.

$$H \leftarrow H + \lambda_p h_p \Delta x_p \quad for \quad p \in A \tag{19}$$

When $h_k{}^{\wedge}$ has changed, a change amount $p_i$ of constraint term to be applied to a local field of decision variable in calculation of an energy difference to be used for flip determination processing of a decision variable is updated by Formula (20).

$$p_i \leftarrow p_i - \Delta x_i \lambda_k \left[ \Delta g(\hat{h}_k, W_{ki} \Delta x_i) - \Delta g(\hat{h}_k^{(old)}, W_{ki} \Delta x_i) \right] \tag{20}$$

When the value of auxiliary variable $x_k$ has changed, $p_i$ is updated by Formula (21).

$$p_i \leftarrow p_i - \lambda_k W_{ki} \Delta x_k \tag{21}$$

The second term on the right side of Formula (21) is a subtraction performed so that a change amount of constraint term corresponding to inversion of an auxiliary variable added to the local field of decision variable is not redundantly calculated for $p_i$.
The $h_i$ calculation unit 176 supplies $p_i$ + $h_i$ and $h_i$ to the ΔE calculation unit 177. Other $h_i$ calculation units including the $h_i$ calculation unit 176a have the function similar to that of the $h_i$ calculation unit 176.
The ΔE calculation unit 177 calculates $\Delta E_i$ to be used for flip determination processing by Formula (22), using $p_i$ + $h_i$ supplied from the $h_i$ calculation unit 176.

$$\Delta E_i = -(h_i + p_i) \Delta x_i \tag{22}$$

The ΔE calculation unit 177 supplies $\Delta E_i$ to be used for flip determination processing and energy change amount $\Delta H_i$ = -$h_i \Delta x_i$ based on $h_i$ to the selection unit 135.
Other ΔE calculation units including the ΔE calculation unit 177a have the function similar to that of the ΔE calculation unit 177.
The selection unit 135 performs flip determination based on ΔE supplied from each of the decision variable modules 134, 134a, ..., and selects a decision variable $x_j$ to be flipped. A method similar to the method exemplified in the first embodiment is used for the flip determination. The selection unit 135 supplies the index of the decision variable to be flipped (flip bit) to each $h_i$ calculation unit of the decision variable modules 134, 134a, .... The selection unit 135 inverts the value of the decision variable $x_j$ to be flipped among the decision variables held in the decision variable processing unit 130a. In FIG. 13, illustration of a decision variable holding unit that holds the value of each decision variable in the decision variable processing unit 130a is omitted. For example, the decision variable holding unit is realized by the internal memory 111.

The selection unit 135 outputs $\Delta H_j$ corresponding to the decision variable to be flipped to the energy holding unit 150, and updates the total energy held in the energy holding unit 150.

The constraint term calculation unit 160a outputs energy change amount $\lambda_k h_k \Delta x_k$ to the energy holding unit 150 in response to flipping of $x_k$, and updates the total energy held in the energy holding unit 150. As is the case with the energy correction processing unit 160, the constraint term calculation unit 160a supplies hk_code, hk_old_code, and hk^_update_bit to each decision variable module of the decision variable processing unit 130a.

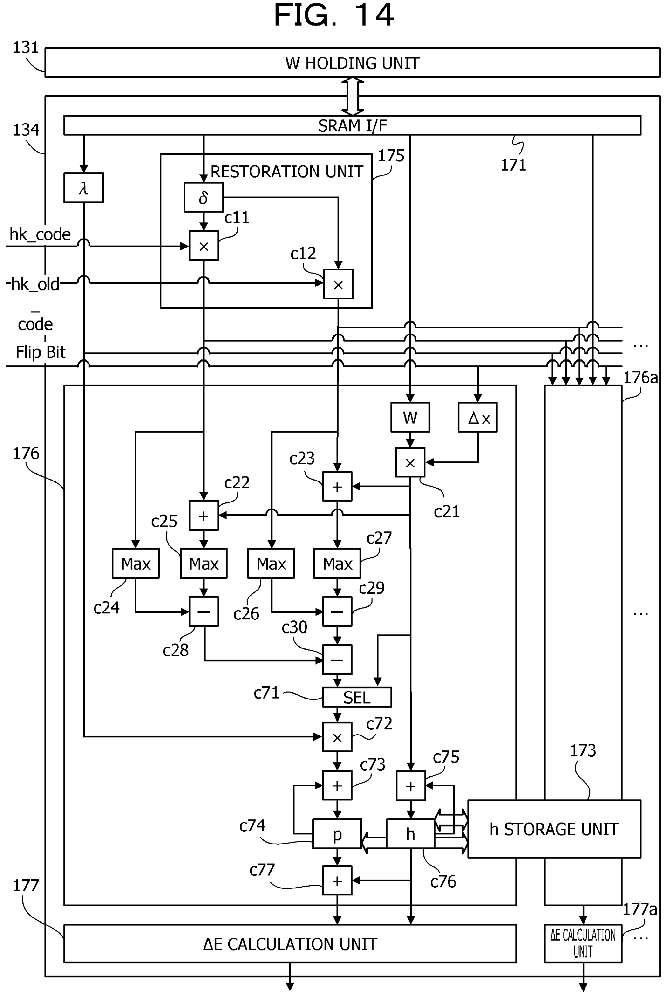

FIG. 14 is a diagram illustrating an example of an $h_i$ calculation unit.

The $h_i$ calculation unit 176 includes multipliers c21 and c72, adders c22, c23, c73, c75, and c77, the Max arithmetic operators c24, c25, c26, and c27, the subtractors c28, c29, and c30, a selector (SEL) c71, and registers c74 and c76.

Among these, the multiplier c21, the adders c22 and c23, the Max arithmetic operators c24, c25, c26, and c27, and the subtractors c28, c29, and c30 are the same as those in the second embodiment. However, a calculation result of the multiplier c21 is supplied to the adder c23, the selector c71, and the adder c75. A calculation result of the subtractor c30 is supplied to the selector c71. In the drawings, inversion of a sign may be omitted by indicating subtraction in a Formula by an adder, or the like.

The selector c71 switches a value to be output to the multiplier c72 between $W_{ki}\Delta x_k$ in a case where $x_k$ is inverted and $\delta h_i$ in a case where $h_k^{\wedge}$ changes.

The multiplier c72 multiplies an output value of the selector c71 by $\lambda_k$, and supplies a multiplication result to the adder c73.

The adder c73 adds an output value of the multiplier c72 to $p_i$ held in the register c74, and updates $p_i$ in the register c74.

The register c74 holds $p_i$ and supplies $p_i$ to the adder c77. When arithmetic operation is performed for a plurality of replicas, $p_i$ for each replica is held in the h storage unit 173, and $p_i$ of the replica for which arithmetic operation is performed is read from the h storage unit 173 to the register c74.

The adder c75 adds $W_{ij}\Delta x_j$ supplied from the multiplier c21 to $h_i$ held in the register c76, and updates $h_i$ in the register c76. $\lambda_k W_{ik}\Delta x_k$ is also added to $h_i$ in the register c76, but illustration of a circuit configuration in which the calculation is performed is omitted.

The register c76 holds $h_i$, and supplies $h_i$ to the $\Delta E$ calculation unit 177 and the adder c77. When arithmetic operation is performed for a plurality of replicas, $h_i$ for each replica is held in the h storage unit 173, and $h_i$ of the replica for which arithmetic operation is performed is read from the h storage unit 173 to the register c76.

The adder c77 adds $p_i$ in the register c74 and $h_i$ in the register c76, and supplies an addition result to the $\Delta E$ calculation unit 177.

Other $h_i$ calculation units including the $h_i$ calculation unit 176a are realized by the circuit configuration similar to that of the $h_i$ calculation unit 176.

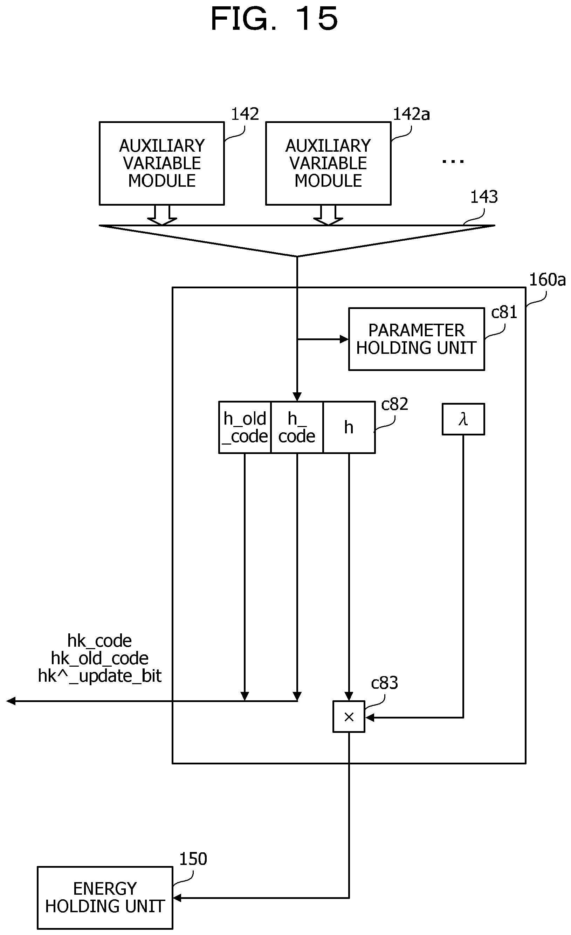

FIG. 15 is a diagram illustrating an example of the constraint term calculation unit.

The constraint term calculation unit 160a includes a parameter holding unit c81, a register c82, and a multiplier c83.

The parameter holding unit c81 holds a constant $\lambda_k$ indicating a weight for each constraint term.

The register c82 holds and outputs the codes hk_old_code and hk_code supplied from the selection unit 143 and the local field $h_k$.

The multiplier c83 multiplies $\lambda_k$ by $h_k$, supplies a multiplication result to the energy holding unit 150, and updates the total energy according to $\Delta x_k$.

In this way, the constraint term calculation unit 160a performs the update of total energy based on Formula (19). The constraint term calculation unit 160a supplies the codes hk_old_code, hk_code, and hk^_update_bit supplied from the selection unit 143 to the decision variable processing unit 130a.

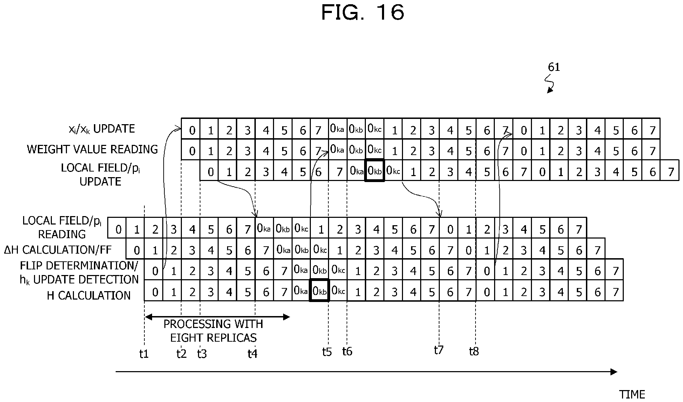

FIG. 16 is a diagram illustrating an example of a timing chart.

Timing chart 61 illustrates an example of the operation of the data processing apparatus 100a in the case where pipeline processing is performed using eight replicas. 0 to 7 are replica numbers. FIG. 16 illustrates the details of processing for the replica with replica number = 0, and other replicas are illustrated in a simplified manner.

For the replica with replica number = 0, flip determination processing is performed (t1), update of $x_i$ and $x_k$ is performed according to the result of processing, and reading of weight values for update of $h_i$ and $h_k$ is performed (t2). The update of $h_i$ and $h_k$ is performed (t3). When three $h_k$ (represented as 0ka, 0kb, and 0kc in FIG. 16) are updated, reading, generation of $h_k^{\wedge}$ and $h_k^{\wedge(old)}$, and update detection of $h_k^{\wedge}$ are performed in this order for the three $h_k$ (t4 to t5). At this time, when there is a change corresponding to inversion of an auxiliary variable in detection of a change in the local field of the auxiliary variable, update of total energy H is performed by the constraint term calculation unit 160a. For example, a thick frame line of 0kb in the drawing indicates that there is a change in the local field corresponding to inversion of the second auxiliary variable among the three auxiliary variables.

Reading of a corresponding $W_{ki}$ is performed in order from $h_k^{\wedge}$ for which update detection has ended (t5), and

update of $p_i$ based on $\delta h_i$ is performed (t6). At this time, when there is a change in the local field corresponding to inversion of an auxiliary variable, the local field $h_i$ of decision variable is updated by Formula (17). After that, the updated $p_i$ and $h_i$ are read (t7), and calculation of $\Delta E$ by $p_i$ and $h_i$, calculation of $\Delta H$ by $h_i$, flip determination processing by $\Delta E$, and calculation of $H(x)$ are performed (t8).

Next, a procedure of the processing of the data processing apparatus 100a will be described.

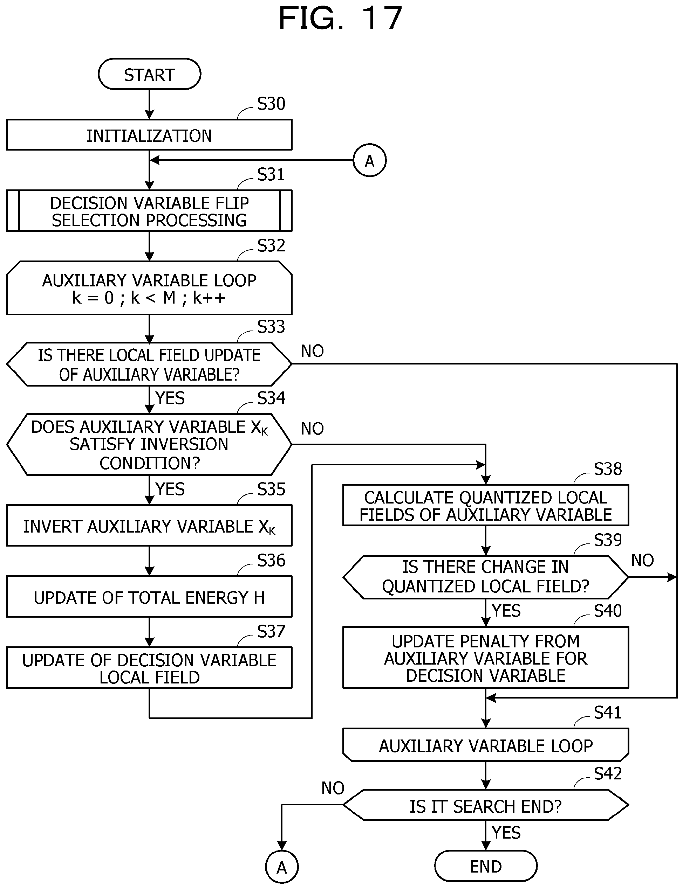

FIG. 17 is a flowchart illustrating an example of overall processing.

Hereinafter, an example in which a search by the simulated annealing method is performed will be described as an example.

(S30) The decision variable processing unit 130a and the auxiliary variable processing unit 140 perform initialization. In the initialization, an initial value of the N decision variables, problem information, and calculation conditions (for example, information on a temperature parameter used in the simulated annealing method, or the like) are set. The initial value of the N decision variables is held in the predetermined decision variable holding unit of the decision variable processing unit 130a. The weight values included in the problem information are divided for each corresponding group of decision variables and auxiliary variables, and are held in the W holding units 131, 131a, ... and the W holding units 141, 141a, ....

In the initialization, an initial value of the M auxiliary variables, an initial value of $h_k$, and an initial value of $h_i$ are calculated based on the initial value of the N decision variables and the problem information, the initial value of N $h_i$ is held in the h storage unit 173, and the initial value of M $h_k$ is held in the h storage unit 183. The initial value of the M auxiliary variables is held in the predetermined auxiliary variable holding unit of the auxiliary variable processing unit 140. An initial value of $H(x)$ is calculated based on the initial value of the N decision variables and the problem information, and is held in the energy holding unit 150.

(S31) The decision variable processing unit 130a performs the decision variable flip selection processing. The procedure of the decision variable flip selection processing is similar to the procedure illustrated in FIG. 12. However, $\Delta E$ of Formula (22) is used for the determination in step S21. Formula (18) is used for the update of H in step S25.

(S32) k is incremented one by one from the index k = 0 of constraint condition, and steps S33 to S40 are repeatedly executed while k < M.

(S33) The non-zero detection unit c42 of the auxiliary variable processing unit 140 determines whether there is local field update of auxiliary variable. When there is local field update of auxiliary variable, the processing proceeds to step S34. When there is no local field update of auxiliary variable, the processing proceeds to step S41.

(S34) The selection unit 143 determines whether the auxiliary variable $x_k$ satisfies an inversion condition. When the inversion condition is satisfied, the processing proceeds to step S35. When the inversion condition is not satisfied, the processing proceeds to step S38.

(S35) The selection unit 143 inverts the value of auxiliary variable $x_k$ held in the auxiliary variable holding unit of the auxiliary variable processing unit 140.

(S36) The constraint term calculation unit 160a updates total energy H held in the energy holding unit 150 by Formula (19).

(S37) The $h_i$ calculation units 176, 176a, ... of the decision variable processing unit 130a update the local field $h_i$ of decision variable according to the inversion of the value of $x_k$ based on Formula (17).

(S38) The quantization units c46 and c47 of the auxiliary variable processing unit 140 calculate codes hk_code and hk_old_code indicating the quantized local fields of the auxiliary variable $x_k$, respectively.

(S39) The change detection unit c48 of the auxiliary variable processing unit 140 determines whether there is a change in quantized local field based on the codes hk_code and hk_old_code. When there is a change, the processing proceeds to step S40. When there is no change, the processing proceeds to step S41. When there is no change, the processing of step S40 in the decision variable processing unit 130a is omitted based on hk^_update_bit supplied from the auxiliary variable processing unit 140 to the decision variable processing unit 130a.

(S40) The $h_i$ calculation units 176, 176a, ... of the decision variable processing unit 130a restore the approximate values $h_k{}^\wedge$ and $h_k{}^{\wedge(old)}$ of the original local field based on hk_code and hk_old_code supplied from the auxiliary variable processing unit 140, and update the penalty $p_i$ from the auxiliary variable $x_k$ for the decision variable $x_i$. Accordingly, the contribution of penalty from an auxiliary variable in Formula (20) is reflected in $p_i$. When $x_k$ is inverted, the $h_i$ calculation units 176, 176a, ... also perform update of $p_i$ by Formula (21).

(S41) When the auxiliary variable loop ends, the processing proceeds to step S42.

(S42) The decision variable processing unit 130a determines whether it is search end. For example, search end is determined when temperature value T in the simulated annealing method reaches the final temperature value. When it is not search end, temperature value T is updated, and the processing proceeds to step S31. When it is search end, the overall processing ends. When it is search end, the decision variable processing unit 130a outputs a calculation result. For example, the calculation result is the total energy and the state obtained when the energy is the minimum energy up to that time.

According to the data processing apparatus 100a of the third embodiment, when there is no change in quantized local field in step S39 in FIG. 17, the update of $h_i$ by Formulae (20) and (21) in step S40 may be omitted. For this reason, the arithmetic operation cost related to the update of $h_i$ may be reduced. As a result, the solution finding performance of the data processing apparatus 100a may be improved. For example, the data processing apparatus 100a may execute the solution finding arithmetic operation at high speed. The data processing apparatus 100a may increase the possibility of reaching a better solution in a relatively short time.

In a case where the decision variable processing unit 130a and the auxiliary variable processing unit 140 are realized by separate electronic circuits corresponding to separate arithmetic operators, it is sufficient that the auxiliary variable processing unit 140 transmits a code of a relatively small number of bits indicating a quantized local field to the decision variable processing unit 130a. Accordingly, the amount of information output from the auxiliary variable processing unit 140 to the decision variable processing unit 130a is reduced. For this reason, complication of wiring inside the processor 110 realized by an FPGA or the like is suppressed, and the cost of circuit mounting is reduced. As a result, a larger-scale parallelization arithmetic operation may be performed.

Since it is sufficient that the data processing apparatus 100a performs update of total energy H according to a change in the local field on the auxiliary variable side only when the auxiliary variable is inverted, the arithmetic operation cost related to the calculation of total energy may be reduced.

[Fourth Embodiment]

Next, a fourth embodiment will be described. Items different from the above-described second and third embodiments will be mainly described, and description of the common items will be omitted.

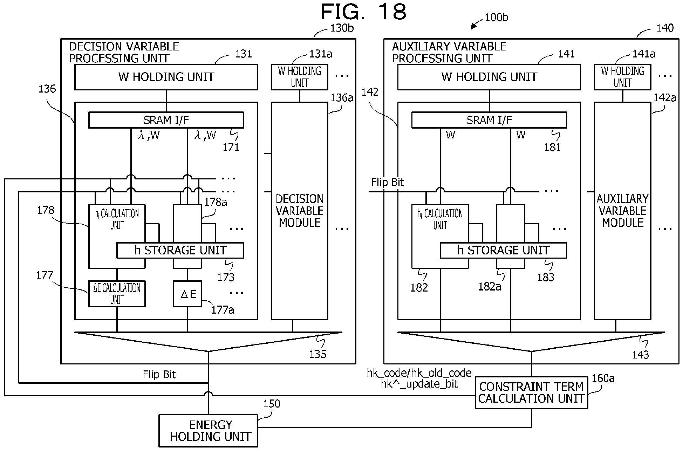

FIG. 18 is a diagram illustrating an example of the functions of a data processing apparatus of the fourth embodiment.

A data processing apparatus 100b of the fourth embodiment provides a function of reducing an amount of data held as the change amount $p_i$ of constraint term to be applied to a local field of decision variable in order to calculate an energy change to be used for flip determination processing.

The data processing apparatus 100b of the fourth embodiment is realized by hardware similar to that of the data processing apparatus 100 of the second embodiment illustrated in FIG. 5. The data processing apparatus 100b has the functions similar to those of the data processing apparatus 100a of the third embodiment. However, the data processing apparatus 100b is different from the data processing apparatus 100a in that a decision variable processing unit 130b is provided instead of the decision variable processing unit 130a.

The decision variable processing unit 130b includes the W holding units 131, 131a, ..., decision variable modules 136, 136a, ..., and the selection unit 135. The W holding units 131, 131a, ... are the same as those in the second embodiment. The selection unit 135 is the same as that in the third embodiment.

The decision variable module 136 includes the SRAM I/F 171, the h storage unit 173, $h_i$ calculation units 178, 178a, ..., and the ΔE calculation units 177, 177a, .... The SRAM I/F 171, the h storage unit 173, and the ΔE calculation units 177, 177a, ... are the same as those in the third embodiment. Other decision variable modules including the decision variable module 136a have the functions similar to those of the decision variable module 136.

The $h_i$ calculation unit 178 separately calculates and holds a local field of decision variable and a change amount of constraint term to be applied to the local field of decision variable. The processing of the $h_i$ calculation unit 178 is similar to the processing of the $h_i$ calculation unit 176 of the third embodiment, but is different from the $h_i$ calculation unit 176 in that the calculation related to $p_i$ is performed by using a quantized weight value obtained by quantizing the weight value $W_{ki}$.

$P_i$^ (p with a hat symbol and an index i) of the fourth embodiment is updated by Formula (23) when $h_k$^ has changed.

$$\hat{p}_i \leftarrow \hat{p}_i - \Delta x_i \lambda_k \left[ \Delta g\big(\hat{h}_k, \hat{W}_{ki}\Delta x_i\big) - \Delta g\big(\hat{h}_k^{(old)}, \hat{W}_{ki}\Delta x_i\big) \right] \ (23)$$

$W_{ki}$^ (W with a hat symbol and an index ki) indicates a quantized weight value.

When $x_k$ has changed, $p_i$^ is updated by Formula (24).

$$\hat{p}_i \leftarrow \hat{p}_i - \lambda_k \hat{W}_{ki}\Delta x_k \qquad\qquad (24)$$

For the accuracy $\delta$ of $h_k$^, for example, the accuracy of $W_{ki}$^ is about $\delta/m = \delta/8$ for the original $W_{ki}$. $p_i$^ in the above formulae (23) and (24) is calculated with the accuracy of $\delta/m$. A code of a predetermined number of bits smaller than the number of bits of $W_{ki}$ corresponding to $W_{ki}$^ and indicating a quantized weight value, is held in advance in the W holding units 131, 131a, ... separately from $W_{ki}$.

The $h_i$ calculation unit 178 restores the accuracy to the original accuracy when $p_i$ is added to $h_i$. For example, the $h_i$ calculation unit 178 sets $(\delta/m)p_i{}^\wedge$ as $p_i$.

The $h_i$ calculation unit 178 outputs $p_i + h_i$ and $h_i$ to the $\Delta E$ calculation unit 177.

Other $h_i$ calculation units including the $h_i$ calculation unit 178a have the function similar to that of the $h_i$ calculation unit 178.

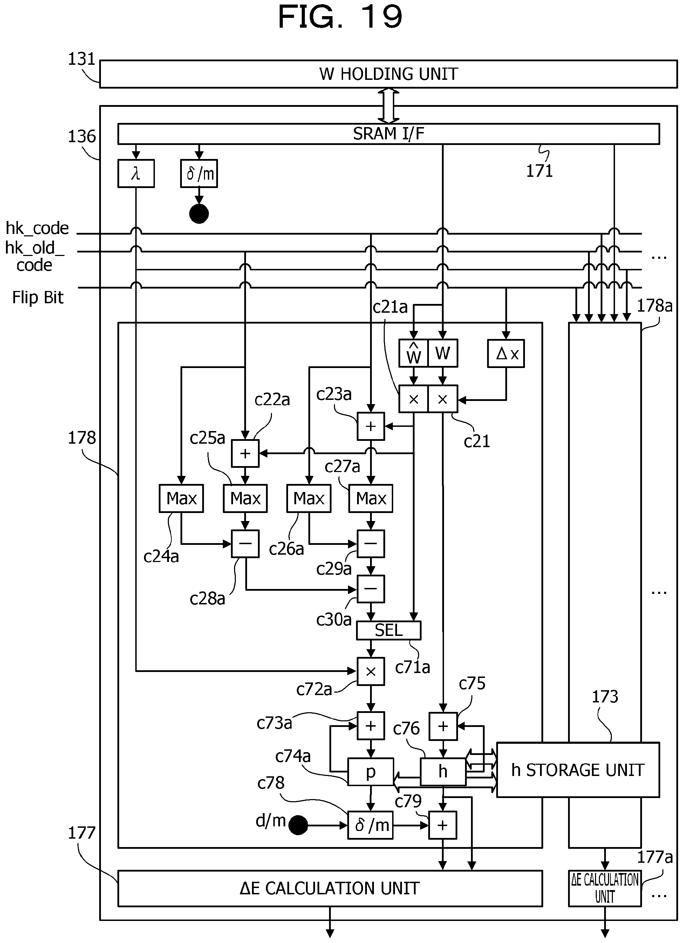

FIG. 19 is a diagram illustrating an example of an $h_i$ calculation unit.

The $h_i$ calculation unit 178 includes multipliers c21, c21a, c72a, and c78, adders c22a, c23a, c73a, c75, and c79, Max arithmetic operators c24a, c25a, c26a, and c27a, subtractors c28a, c29a, and c30a, a selector (SEL) c71a, and registers c74a and c76.

Among these, the multiplier c21, the adder c75, and the register c76 are the same as those in the third embodiment. However, a calculation result of the multiplier c21 is supplied to the adder c75. In the drawings, inversion of a sign may be omitted by indicating subtraction in a Formula by an adder, or the like.

The multiplier c21a multiplies the change amount $\Delta x_i$ of the value of the decision variable $x_i$ corresponding to the $h_i$ calculation unit 178 by the code indicating the quantized weight value $W_{ki}{}^\wedge$ between $x_i$ and the constraint term of index k, and outputs a multiplication result. The code indicating the quantized weight value $W_{ki}{}^\wedge$ is read from the W holding unit 131 by the SRAM I/F 171, and is supplied to the multiplier c21a.

The adder c22a adds an output value of the multiplier c21a and hk_old_code supplied from the auxiliary variable processing unit 140, and outputs an addition result.

The adder c23a adds an output value of the multiplier c21a and hk_code supplied from the auxiliary variable processing unit 140, and outputs an addition result.

The Max arithmetic operator c24a compares hk_old_code supplied from the auxiliary variable processing unit 140 with 0, and outputs the larger one.

The Max arithmetic operator c25a compares an output value of the adder c22a with 0, and outputs the larger one.

The Max arithmetic operator c26a compares hk_code supplied from the auxiliary variable processing unit 140 with 0, and outputs the larger one.

The Max arithmetic operator c27a compares an output value of the adder c23a with 0, and outputs the larger one.

The subtractor c28a calculates and outputs a difference between an output value of the Max arithmetic operator c24a and an output value of the Max arithmetic operator c25a.

The subtractor c29a calculates and outputs a difference between an output value of the Max arithmetic operator c26a and an output value of the Max arithmetic operator c27a.

The subtractor c30a calculates and outputs a difference between an output value of the subtractor c28a and an output value of the subtractor c29a.

The selector c71a switches a value to be output to the multiplier c72a between an output value of the subtractor c30a and an output value of the multiplier c21a.

The multiplier c72a multiplies an output value of the selector c71a by $\lambda_k$, and supplies a multiplication result to the adder c73a.

The adder c73a adds an output value of the multiplier c72a to $p_i{}^\wedge$ held in the register c74a, and updates $p_i{}^\wedge$ in the register c74a.

The register c74a holds $p_i{}^\wedge$ and supplies $p_i{}^\wedge$ to the multiplier c78. When arithmetic operation is performed for a plurality of replicas, $p_i{}^\wedge$ for each replica is held in the h storage unit 173, and $p_i{}^\wedge$ of the replica for which arithmetic operation is performed is read from the h storage unit 173 to the register c74a.

The adder c75 adds $W_{ij}\Delta x_j$ supplied from the multiplier c21 to $h_i$ held in the register c76, and updates $h_i$ in the register c76. $\lambda_k W_{ik}\Delta x_k$ is also added to $h_i$ in the register c76, but illustration of a circuit configuration in which the calculation is performed is omitted.

The multiplier c78 acquires $p_i$ by multiplying $p_i{}^\wedge$ by $\delta/m$, and supplies $p_i$ to the adder c79.

The adder c79 adds $p_i$ and $h_i$ of the register c76, and supplies an addition result to the $\Delta E$ calculation unit 177.

Other $h_i$ calculation units including the $h_i$ calculation unit 178a are realized by the circuit configuration similar to that of the $h_i$ calculation unit 178.

According to the data processing apparatus 100b of the fourth embodiment, the arithmetic operation of $p_i{}^\wedge$ may be performed by a code of a smaller number of bits than the original number of bits of the local field and weight value. For this reason, as compared with the third embodiment, the circuit for calculating a change amount ($p^\wedge$) of constraint term and the memory capacity for storing $p^\wedge$ may be reduced.

Although the examples in which the simulated annealing method is executed by the data processing apparatuses 100, 100a, and 100b have been described in the second to fourth embodiments, the data processing apparatuses 100, 100a, and 100b may execute the replica exchange method for a plurality of replicas.

Next, comparative examples will be described.

(Comparative Examples)

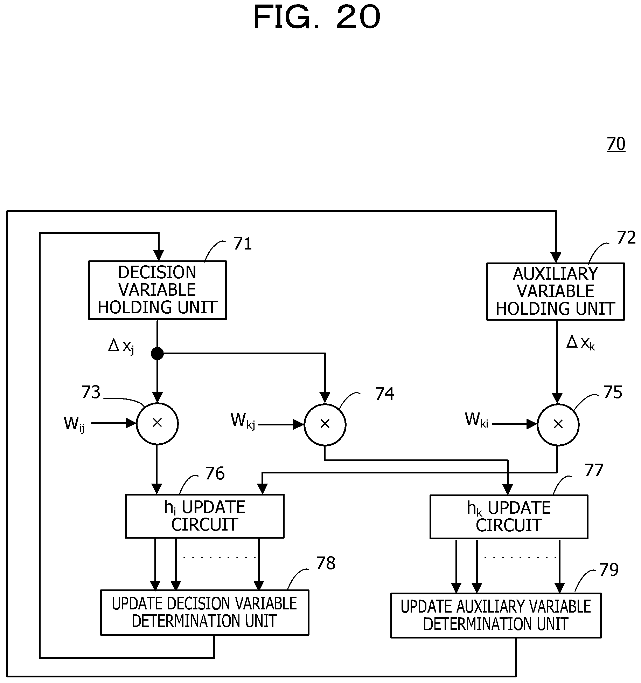

FIG. 20 is a diagram illustrating the functions of a data processing apparatus of comparative example 1.

A data processing apparatus 70 of comparative example 1 includes a decision variable holding unit 71, an auxiliary variable holding unit 72, multipliers 73, 74, and 75, an $h_i$ update circuit 76, an $h_k$ update circuit 77, an update decision variable determination unit 78, and an update auxiliary variable determination unit 79.

The decision variable holding unit 71 holds N decision variables ($x_i$). The decision variable holding unit 71 outputs a change amount of the flip candidate $x_j$ ($\Delta x_j$).

The auxiliary variable holding unit 72 holds M auxiliary variables ($x_k$). $X_k$ is a variable that is 0 when the constraint condition of identification number = k is satisfied, and is 1 when the constraint condition is not satisfied. The auxiliary variable holding unit 72 outputs a change amount of the flip candidate $x_k$ ($\Delta x_k$).

When such auxiliary variable is used, for example, H(x) may be expressed by the following Formula (25).

$$H(x) = E(x) + P(x)$$
$$= E(x) + \sum_{k \in A} \lambda_k \left( \sum_{i \in D} W_{ki} x_i - U_k \right) x_k \qquad (25)$$

In the data processing apparatus 70 of comparative example 1, $h_i$ may be expressed by the following Formula (26).

$$h_i = \sum_{j \in D} W_{ij} x_j + b_i - \sum_{k \in A} \lambda_k W_{ki} x_k \qquad (26)$$

$h_k$ may be expressed by the following Formula (27).

$$h_k = \sum_{i \in D, k \in A} W_{ki} x_i - U_k \qquad (27)$$

Formula (27) is the same as Formula (8) when - $U_k = b_k$.

The multiplier 73 outputs a product of $\Delta x_j$ and $W_{ij}$, which is a change amount of $h_i$ such as that illustrated in Formula (26) in a case where the value of $x_j$ of a flip candidate has changed.

The multiplier 74 outputs a product of $\Delta x_j$ and $W_{kj}$, which is a change amount of $h_k$ such as that illustrated in Formula (27) in the case where the value of $x_j$ of a flip candidate has changed.

The multiplier 75 outputs a product of $\Delta x_k$ and $W_{ki}$, which is a change amount of $h_i$ such as that illustrated in Formula (26) in a case where the value of $x_k$ of a flip candidate has changed.

When the value of $x_j$ of a flip candidate has changed, the $h_i$ update circuit 76 updates $h_i$ by adding $W_{ij}\Delta x_j$ to the original $h_i$. When the value of $x_k$ of a flip candidate has changed, the $h_i$ update circuit 76 updates $h_i$ by adding -$\lambda_k W_{ki}\Delta x_k$ to the original $h_i$.

When the value of $x_j$ of a flip candidate has changed, the $h_k$ update circuit 77 updates $h_k$ by adding $W_{kj}\Delta x_j$ to the original $h_k$.

The update decision variable determination unit 78 calculates $\Delta H = -h_j \Delta x_j$ based on $h_j$ which is a first local field for $x_j$ of a flip candidate. The update decision variable determination unit 78 determines whether the value of $x_j$ is to be changed based on a result of comparison between $\Delta H$ and a predetermined value, and when it is determined that the value of $x_j$ is to be changed, changes the value of $x_j$ held in the decision variable holding unit 71.

The update auxiliary variable determination unit 79 calculates $\Delta H = +\lambda_k h_k \Delta x_k$ based on $h_k$ which is the second local field for $x_k$ of a flip candidate. The update auxiliary variable determination unit 79 determines whether the value of $x_k$ is to be changed based on a result of comparison between $\Delta H$ and a predetermined value, and when it is determined that the value of $x_k$ is to be changed, changes the value of $x_k$ held in the auxiliary variable holding unit 72.

In such data processing apparatus 70, $h_i$ is updated based on N $W_{ki}$ when a change in the value of the auxiliary variable ($x_k$) representing the presence or absence of violation of a certain constraint condition is allowed. Accordingly, $W_{ki}$ related to all M constraint terms do not have to be read, the number of times of performing addition processing (the processing of adding $\Delta h_i = -\lambda_k W_{ki}\Delta x_k$ to the original $h_i$) is suppressed, and the amount of calculation for update processing may be reduced.

However, in the data processing apparatus 70 of comparative example 1, at the time of determining whether the value of the state variable of a flip candidate is to be changed, a change amount of constraint term due to the change is not taken into consideration. For this reason, there is a possibility that the following prediction errors occur until H(x) is updated by $\Delta H = +\lambda_k h_k \Delta x_k$ in response to a change in the value of an auxiliary variable.

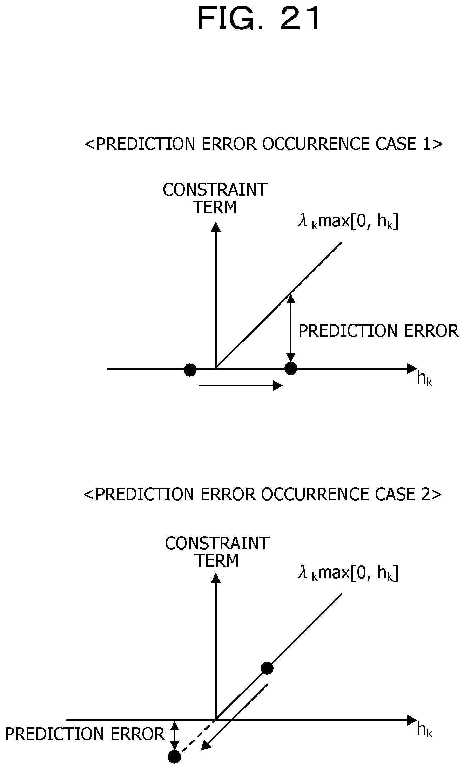

FIG. 21 is a diagram illustrating an example of prediction error occurrence in the data processing apparatus of comparative example 1.

The vertical axis represents the magnitude of constraint term, and the horizontal axis represents $h_k$. In FIG. 21, a constraint term of an inequality constraint is represented by $\lambda_k \max[0, h_k]$.

Prediction error occurrence case 1 illustrates a prediction error that occurs when a state changes from the satisfaction state to the violation state of an inequality constraint. Prediction error occurrence case 2 illustrates a prediction error that occurs when a state changes from the violation state to the satisfaction state of an inequality constraint.

In either case, there is a possibility that a prediction error such as that illustrated in FIG. 21 occurs.

For this reason, there is a possibility that it is difficult to improve the solution finding performance for an inequality constraint problem with a high level of difficulty.

By contrast, in the data processing apparatuses 10, 100, 100a, and 100b of the first to fourth embodiments, as in Formulae (13) and (14) described above, a value reflecting not only the change amount of E(x) due to a change in the value of $x_i$ but also an approximate value of the change amount of P(x) based on a quantized local field is used as $h_i$. For this reason, flip determination may be performed based on more accurate $\Delta H_i$. Accordingly, the solution finding performance may be improved.

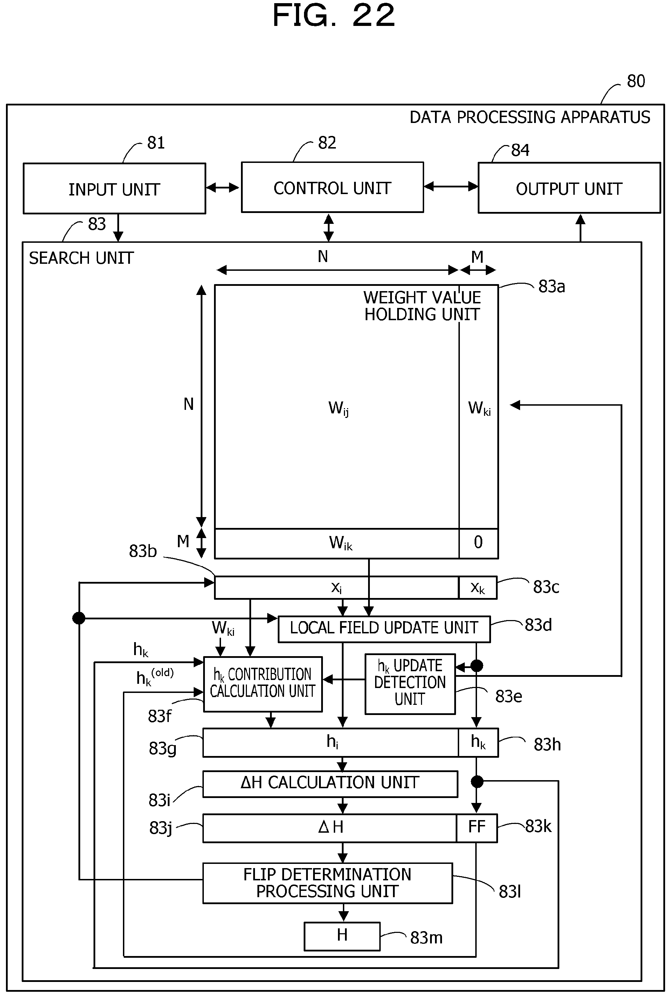

FIG. 22 is a diagram illustrating an example of the functions of a data processing apparatus of comparative example 2 (part 1).

A data processing apparatus 80 of comparative example 2 is different from the data processing apparatus 100 of the second embodiment in that the data processing apparatus 80 updates the local field of decision variable without quantizing the local field of auxiliary variable, for example, by using Formula (12) instead of Formulae (13) and (14). However, as described above, when i = j for index j of a flipped decision variable, $h_i$ does not have to be updated.

The data processing apparatus 80 includes an input unit 81, a control unit 82, a search unit 83, and an output unit 84.

For example, the input unit 81, the control unit 82, the search unit 83, and the output unit 84 may be implemented by using a program module executed by a processor included in the data processing apparatus 80 or a storage area (register or cache memory) in the processor. The search unit 83 may also be implemented by using a storage area secured in the RAM or the HDD included in the data processing apparatus 80.

For example, the input unit 81 receives input of an initial value of the N decision variables, problem information, and calculation conditions. For example, the problem information includes $W_{ij}$, $b_i$, and $\lambda_k$ in Formula (10) in addition to $W_{ki}$ and $b_k$ in Formula (8). For example, the calculation conditions include the number of replicas, a replica exchange cycle, and the value of temperature parameter set for each replica in a case where the replica exchange method is executed, and a temperature parameter change schedule, an end condition of calculation, and the like in a case where the simulated annealing method is performed.

These pieces of information may be input by the operation of an input device by a user, or may be input to the data processing apparatus 80 via a recording medium or a network.

The control unit 82 controls each unit of the data processing apparatus 80 and causes the units to execute the processing to be described later.

The search unit 83 searches for a state in which the value of an evaluation function (total energy) is local minimum by repeating flip determination processing and update processing under the control of the control unit 82.

The output unit 84 outputs a search result (calculation result) of the search unit 83.

For example, the output unit 84 may output and display the calculation result on a display, may transmit the calculation result to another information processing apparatus via a network, or may store the calculation result in an external storage device.

The search unit 83 includes a weight value holding unit 83a, a decision variable holding unit 83b, an auxiliary variable holding unit 83c, a local field update unit 83d, an $h_k$ update detection unit 83e, and an $h_k$ contribution calculation unit 83f. The search unit 83 includes an $h_i$ holding unit 83g, an $h_k$ holding unit 83h, a $\Delta H$ calculation unit 83i, a $\Delta H$ holding unit 83j, a flip-flop (FF) 83k, a flip determination processing unit 83l, and an H holding unit 83m.

The weight value holding unit 83a holds $N \times N$ $W_{ij}$, and holds $M \times N$ $W_{ki}$ and $N \times M$ $W_{ik}$. Since $W_{ki} = W_{ik}$, the weight value holding unit 83a does not have to hold $N \times M$ $W_{ik}$. The weight value holding unit 83a does not have to hold $W_{ki}$ having the value of 0.

The decision variable holding unit 83b holds the values of N decision variables ($x_i$). When a decision variable of a flip candidate is designated among the N decision variables, the decision variable holding unit 83b outputs a change amount of the value of the decision variable. For example, when $x_j$ is designated, $\Delta x_j = 1 - 2x_j$ is output.

The auxiliary variable holding unit 83c holds the values of M auxiliary variables ($x_k$). For example, $x_k$ is used for

detecting whether a constraint condition is satisfied. In FIG. 22, illustration for the configuration of updating $x_k$ is omitted. For example, with respect to a constraint term of the ReLU type function in FIG. 2, when $h_k > 0$, $g(h_k) > 0$ and a constraint condition violation occurs. Therefore, such a configuration is provided that $x_k = 1$ when $h_k > 0$ and $x_k = 0$ when $h_k \leq 0$. However, the data processing apparatus 80 of comparative example 2 does not have to use $x_k$. In this case, the auxiliary variable holding unit 83c does not have to be provided.

When a change in the value of a decision variable of a flip candidate is allowed (when flipping may be performed), the local field update unit 83d reads a weight value between the decision variable and another decision variable from the weight value holding unit 83a, and updates the local field by using the weight value. For example, when $x_j$ may be flipped, the local field update unit 83d updates $h_i$ by adding $W_{ij}\Delta x_j$ to each $h_i$.

When a decision variable of a flip candidate may be flipped, the local field update unit 83d reads a weight value of which value is not 0 among the weight values between the decision variable and M local fields ($h_k$), and updates $h_k$ by using the weight value. For example, when $x_j$ may be flipped, the local field update unit 83d updates $h_k$ by adding $W_{kj}\Delta x_j$ to $h_k$.

The $h_k$ update detection unit 83e detects an update of $h_k$.

The $h_k$ contribution calculation unit 83f reads $W_{ki}$ that is not 0 from the weight value holding unit 83a in order to calculate a change amount of $h_i$ due to a change in the value of $h_k$ for which an update is detected. The $h_k$ contribution calculation unit 83f acquires $h_k$ from the $h_k$ holding unit 83h, and acquires $h_k^{(old)}$ from the FF 83k. The $h_k$ contribution calculation unit 83f calculates $\delta h_i' = -\lambda_k(\Delta g(h_k, W_{ki}\Delta x_i) - \Delta g(h_k^{(old)}, W_{ki}\Delta x_i))$, and updates $h_i$ by adding $\delta h_i'$ to the original $h_i$. When $i = j$ for index $j$ of a flipped decision variable, $\delta h_i' = 0$. In the calculation of $\delta h_i'$, quantized values $h_k^\wedge$ and $h_k^{\wedge(old)}$ are not used, and $h_k$ and $h_k^{(old)}$ are used as they are.

The $h_i$ holding unit 83g holds N $h_i$.

The $h_k$ holding unit 83h holds M $h_k$.

The $\Delta H$ calculation unit 83i calculates $\Delta H$ based on a local field corresponding to a decision variable of a flip candidate. For example, when $x_j$ is the flip candidate, the $\Delta H$ calculation unit 83i calculates $\Delta H_j = -h_j\Delta x_j$.

The $\Delta H$ holding unit 83j holds $\Delta H_j$ calculated by the $\Delta H$ calculation unit 83i.

The FF 83k supplies $h_k^{(old)}$ to the $h_k$ contribution calculation unit 83f by holding $h_k$ and delaying the timing of outputting $h_k$.

The flip determination processing unit 83l performs flip determination processing of determining whether the decision variable of a flip candidate may be flipped based on a result of comparison between $\Delta H$ and a predetermined value. For example, the predetermined value is a noise value obtained based on a random number and a value of temperature parameter. For example, when $-\Delta H \geq \log(\text{rand}) \times T$, the flip determination processing unit 83l determines that a change in the value of the decision variable of a flip candidate is allowed.

The flip determination processing unit 83l transmits the identification number of the decision variable for which it is determined that flipping may be performed to the decision variable holding unit 83b, and causes the decision variable holding unit 83b to update the value of the decision variable.

The flip determination processing unit 83l updates H(x) held in the H holding unit 83m based on $\Delta H$ generated by the change in the value of the decision variable that may be flipped.

The H holding unit 83m holds H(x). The H holding unit 83m may hold H(x) and the state obtained when the energy is the minimum energy up to that time.

The data processing apparatuses 100, 100a, and 100b of the second to fourth embodiments may also have functions corresponding to the input unit 81, the control unit 82, the search unit 83, and the output unit 84.

For example, the functions of the data processing apparatus 80 of comparative example 2 may be realized by the following circuit configuration.

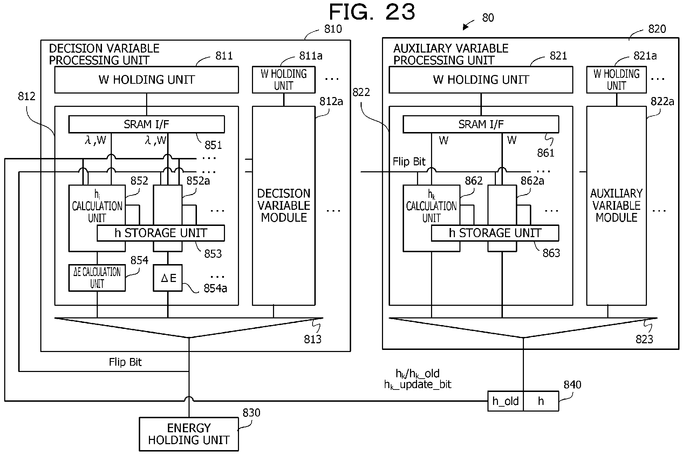

FIG. 23 is a diagram illustrating an example of the functions of the data processing apparatus of comparative example 2 (part 2).

The data processing apparatus 80 includes a decision variable processing unit 810, an auxiliary variable processing unit 820, an energy holding unit 830, and an h holding unit 840. The energy holding unit 830 corresponds to the energy holding unit 150 of the data processing apparatus 100 of the second embodiment.

The decision variable processing unit 810 includes W holding units 811, 811a, ..., decision variable modules 812, 812a, ..., and a selection unit 813.

The W holding units 811, 811a, ... and the selection unit 813 correspond to the W holding units 131, 131a, ... and the selection unit 133 of the data processing apparatus 100 of the second embodiment, respectively.

The decision variable modules 812, 812a, ... calculate the local field $h_i$ for each decision variable and calculate $\Delta E_i$. One decision variable module is associated with a group of a predetermined number of decision variables. Comparative example 2 is different from the second to fourth embodiments in that, in the calculation of local field $h_i$ in the decision variable modules 812, 812a, ..., the local field of auxiliary variable is used as the original value without quantization.

The decision variable module 812 includes an SRAM I/F 851, $h_i$ calculation units 852, 852a, ..., an h storage unit 853, and $\Delta E$ calculation units 854, 854a, .... Other decision variable modules of the decision variable processing unit 810 including the decision variable module 812a have the configuration similar to that of the decision variable module 812.

The SRAM I/F 851 and the h storage unit 853 correspond to the SRAM I/F 171 and the h storage unit 173 of the data processing apparatus 100 of the second embodiment, respectively.

The $h_i$ calculation units 852, 852a, ... calculate the local field $h_i$ of a corresponding decision variable $x_i$. The $h_i$ calculation units 852, 852a, ... update the local field $h_i$ by Formula (12) in response to a change in the local field $h_k$ of auxiliary variable. At this time, as described above, when i = j, the local field $h_i$ is not updated. $h_k$ and $h_k^{(old)}$ to be used for calculation of Formula (12) are supplied from the auxiliary variable processing unit 820 side to each $h_i$ calculation unit.

The $\Delta E$ calculation unit 854 calculates $\Delta E_i = \Delta H_i = -h_i \Delta x_i$ based on $h_i$ supplied from the $h_i$ calculation unit 852, and outputs $\Delta E_i = \Delta H_i = -h_i \Delta x_i$ to the selection unit 813.

The auxiliary variable processing unit 820 includes W holding units 821, 821a, ..., auxiliary variable modules 822, 822a, ..., and a selection unit 823.

The W holding units 821, 821a, ... and the selection unit 823 correspond to the W holding units 141, 141a, ... and the selection unit 143 of the data processing apparatus 100 of the second embodiment, respectively.

The auxiliary variable modules 822, 822a, ... calculate a local field $h_k$ for each constraint term. One auxiliary variable module is associated with a group of a predetermined number of constraint terms. Comparative example 2 is different from the second to fourth embodiments in that the auxiliary variable modules 822, 822a, ... output the local field of auxiliary variable to the selection unit 823 without performing quantization of the local field.

The auxiliary variable module 822 includes an SRAM I/F 861, $h_k$ calculation units 862, 862a, ..., and an h storage unit 863.

The SRAM I/F 861 and the h storage unit 863 correspond to the SRAM I/F 181 and the h storage unit 183 of the data processing apparatus 100 of the second embodiment, respectively.

The $h_k$ calculation units 862, 862a, ... calculate the local field $h_k$ of a corresponding constraint term. The $h_k$ calculation units 862, 862a, ... output the calculated local field $h_k$ to the selection unit 823 without quantization.

The selection unit 823 sequentially stores $h_k$ output from the $h_k$ calculation units 862, 862a, ... in the h holding unit 840.

The h holding unit 840 holds the local field $h_k$ and the local field $h_k^{(old)}$ before update, and supplies hk_update_bit indicating index k for which the update of local field $h_k$ has occurred, $h_k$, and $h_k^{(old)}$ to each $h_i$ calculation unit of the decision variable modules 812, 812a, ....

In the data processing apparatus 80 of comparative example 2, since the local field $h_i$ of decision variable is updated every time the local field $h_k$ corresponding to a constraint condition is updated, the amount of arithmetic operation for the update of $h_i$ is large. By contrast, in the data processing apparatuses 10, 100, 100a, and 100b of the first to fourth embodiments, it is sufficient that the local field $h_i$ of decision variable is updated when the quantized local field $h_k\hat{}$ corresponding to a constraint condition has changed. For this reason, the arithmetic operation cost related to the update of $h_i$ may be reduced compared with the case where $h_i$ is updated every time the original local field $h_k$ corresponding to a constraint condition is updated.

In the data processing apparatus 80 of comparative example 2, the local fields $h_k$ and $h_k^{(old)}$ are transmitted from the auxiliary variable processing unit 820 to the decision variable processing unit 810 as the original values without quantization. The number of bits of a local field is relatively large. For example, the number of bits of a local field is 64 bits, and 64 bits $\times$ 2 = 128 bits for $h_k$ and $h_k^{(old)}$. The number of arithmetic operators corresponding to the $h_i$ calculation units for decision variables is also large. For example, when the number of decision variables is 8K, the number of arithmetic operators is also 8K. K represents kilo. Since data is data of an arithmetic data path, in a case where a plurality of replicas is processed, distribution in accordance with a pipeline operation of the plurality of replicas is desired.

As described above, in the data processing apparatus 80 of comparative example 2, a data path having a wide bus width and requested to have high speed performance is distributed to the entire chip, and wiring is difficult.

By contrast, in the data processing apparatuses 10, 100, 100a, and 100b of the first to fourth embodiments, the data transfer size of the local field of auxiliary variable may be reduced by using the value obtained by quantizing the local field of auxiliary variable as the local field of auxiliary variable used for updating the local field of decision variable. For this reason, the cost of circuit mounting is reduced, and large-scale parallelization is possible.

As described above, the data processing apparatus 100 of the second embodiment performs the following processing.

The data processing apparatus 100 searches for a combination of the values of a plurality of state variables in which a value calculated by using an Ising-type evaluation function including the plurality of state variables is local minimum or local maximum. The internal memory 111 stores the total energy that is a sum of a constraint term having the value corresponding to the presence or absence of violation of a constraint condition and the value of the evaluation function, the values of the plurality of state variables, a first weight value between the plurality of state variables, a second weight value between at least some state variables of the plurality of state variables and the constraint condition, a first local field representing a first change amount of the total energy in a case where the value of each of the plurality of state variables changes, and a second local field used for determination of a constraint violation amount for the constraint condition. The processor 110 repeats the processing of determining whether a change in the value of a first state variable among the plurality of state variables is allowed based on the first local field, and the processing of, when it is determined that a change in the value of the first state variable is allowed, updating the first local field based on the first weight value, updating the second local field based on the second weight value between the first state variable and the constraint condition, and further updating the first local field based on a first quantized local field obtained by quantizing the second local field before the update and a second quantized local field obtained by quantizing the second local field after the update.

Accordingly, the data processing apparatus 100 may increase the efficiency of arithmetic operation. The state variables correspond to the decision variables of the second to fourth embodiments.

For example, in a case where the first quantized local field and the second quantized local field are the same, the processor 110 omits the update of the first local field based on the first quantized local field and the second quantized local field.

Accordingly, the data processing apparatus 100 may reduce the arithmetic operation cost of updating the first local field.

When it is determined that a change in the value of the first state variable is allowed, the processor updates the first local field based on a difference between a change amount of the constraint term calculated by using an approximate value of the second local field before the update that corresponds to the first quantized local field, and a change amount of the constraint term calculated by using an approximate value of the second local field after the update that corresponds to the second quantized local field.

Accordingly, the data processing apparatus 100 may appropriately update the first local field. For example, such update of the first local field is performed based on Formula (13) (in the case of $i \neq j$) or Formula (14) (in the case of $i = j$) for index j of a state variable to be flipped.

The processor 110 includes a first arithmetic operator that updates the first local field and a second arithmetic operator that updates the second local field. The second arithmetic operator outputs, to the first arithmetic operator, a first code of a second number of bits smaller than a first number of bits of the second local field that indicates the first quantized local field, and a second code of the second number of bits that indicates the second quantized local field. The first arithmetic operator acquires an approximate value of the second local field before the update based on the first code, acquires an approximate value of the second local field after the update based on the second code, and updates the first local field based on the approximate values of the second local field before and after the update.

Accordingly, the amount of data transferred between the first arithmetic operator and the second arithmetic operator is reduced. The cost of circuit mounting in the processor 110 is reduced. The decision variable processing unit 130 described above corresponds to a first arithmetic operation circuit, a first processor core, or the like included in the processor 110, and is an example of the first arithmetic operator. The auxiliary variable processing units 140 corresponds to a second arithmetic operation circuit, a second processor core, or the like included in the processor 110, and is an example of the second arithmetic operator. hk_old_code is an example of the first code. hk_code is an example of the second code. The first arithmetic operator and the second arithmetic operator may also be referred to as the first arithmetic operation circuit and the second arithmetic operation circuit, respectively.

When the second local field is updated, the processor 110 corrects the total energy based on the second local field before the update, the second local field after the update, the first quantized local field, and the second quantized local field.

Accordingly, the data processing apparatus 100 may appropriately calculate the total energy of each state in the search. The correction of total energy is performed based on Formula (15).

As exemplified in the third embodiment, the processor 110 may individually store, in the storage unit, the first local field and a second change amount of the constraint term according to the first quantized local field and the second quantized local field. In this case, the processor 110 updates the first local field and the second change amount based on the second weight value according to a change in the value of an auxiliary variable indicating whether the constraint condition is satisfied for the values of the plurality of state variables. The processor 110 determines whether a change in the value of the first state variable is allowed, based on the first local field and the second change amount. The processor 110 updates the total energy based on the first local field according to a change in the value of the first state variable, and updates the total energy based on the second local field according to a change in the value of an auxiliary variable.

Accordingly, the processor 110 does not have to correct the total energy based on the second local field before and after the update, the first quantized local field, and the second quantized local field every time the second local field is updated. $p_i$ in Formulae (20) and (21) is an example of the second change amount. The update of first local field based on the second weight value according to a change in the value of an auxiliary variable is performed based on Formula (17). The update of second change amount based on the second weight value according to a change in the value of an auxiliary variable is performed based on Formula (21). For the second change amount, update by Formula (20) is also performed according to a change in the second quantized local field with respect to the first quantized local field. The update of total energy according to a change in the value of the first state variable is performed based on Formula (18). The update of total energy according to a change in the value of an auxiliary variable is performed based on Formula (19).

As exemplified in the fourth embodiment, the second change amount held in the storage unit may be represented by a smaller number of bits than a third number of bits used for representation of a constraint violation amount. In this case, the processor 110 updates the second change amount based on a code of a smaller number of bits than the number of bits of the second weight value that corresponds to the second weight value, and when the first local field is updated by using the second change amount, converts the second change amount into a value represented by the third number of bits.

Accordingly, the storage capacity of the storage unit for holding the second change amount, for example, the internal memory 111, may be reduced, and memory saving may be achieved. Reduction of the mounting cost of a circuit that calculates the second change amount may be achieved. $p_i^{\wedge}$ in Formulae (24) and (25) is an example of the second change amount represented by a smaller number of bits than the third number of bits, which is the number of bits of $p_i$.

The information processing of the first embodiment may be realized by causing the processing unit 12 to execute a program. The information processing of the second to fourth embodiments may be realized by causing the processor 101 to execute a program. The program may be recorded in the computer-readable recording medium 53.

For example, the program may be circulated by distributing the recording medium 53 in which the program is recorded. The program may be stored in another computer, and the program may be distributed via a network. For example, a computer may store (install), in a storage device such as the DRAM 102 or the HDD 103, the program recorded in the recording medium 53 or the program received from the other computer, and read the program from the storage device and execute the program.

**Claims**

1. A data processing apparatus (10) that searches for a combination of values of a plurality of state variables in which a value calculated by using an Ising-type evaluation function that includes the plurality of state variables is local minimum or local maximum, the data processing apparatus comprising:

   a storage unit (11) that stores

      total energy, which is a sum of a constraint term that has a value that corresponds to presence or absence of violation of a constraint condition and a value of the evaluation function,
      values of the plurality of state variables,
      a first weight value between the plurality of state variables,
      a second weight value between at least some state variables of the plurality of state variables and the constraint condition,
      a first local field that represents a first change amount of the total energy in a case where a value of each of the plurality of state variables changes, and

      a second local field that is used for determination of a constraint violation amount for the constraint condition; and
      a processing unit (12) that repeats processing of determining whether a change in a value of a first state variable among the plurality of state variables is allowed based on the first local field, and processing of, when it is determined that a change in a value of the first state variable is allowed, updating the first local field based on the first weight value, updating the second local field based on the second weight value between the first state variable and the constraint condition, and further updating the first local field based on a first quantized local field and a second quantized local field each obtained by quantizing the second local field before and after update, wherein
      the processing unit (12) includes a first arithmetic operator that updates the first local field and a second arithmetic operator that updates the second local field,
      the second arithmetic operator outputs, to the first arithmetic operator, a first code of a second number of bits smaller than a first number of bits of the second local field that indicates the first quantized local field, and a second code of the second number of bits that indicates the second quantized local field, and
      the first arithmetic operator acquires an approximate value of the second local field before update based on the first code, acquires an approximate value of the second local field after update based on the second code, and updates the first local field based on approximate values of the second local field before and after update.

2. The data processing apparatus (10) according to claim 1, wherein in a case where the first quantized local field and the second quantized local field are same, the processing unit (12) omits update of the first local field based on the first quantized local field and the second quantized local field.

3. The data processing apparatus (10) according to claim 1, wherein
when it is determined that a change in a value of the first state variable is allowed, the processing unit (12) updates the first local field based on a difference between a change amount of the constraint term calculated by using an approximate value of the second local field before update that corresponds to the first quantized local field, and a change amount of the constraint term calculated by using an approximate value of the second local field after update that corresponds to the second quantized local field.

4. The data processing apparatus (10) according to claim 1, wherein
when the second local field is updated, the processing unit (12) corrects the total energy based on the second local field before update, the second local field after update, the first quantized local field, and the second quantized local field.

5. The data processing apparatus (10) according to claim 1, wherein

the processing unit (12)
individually stores, in the storage unit (11), the first local field and a second change amount of the constraint term according to the first quantized local field and the second quantized local field,
updates the first local field and the second change amount based on the second weight value according to a change in a value of an auxiliary variable that indicates whether the constraint condition is satisfied for values of the plurality of state variables,
determines whether a change in a value of the first state variable is allowed, based on the first local field and the second change amount, and
updates the total energy based on the first local field according to a change in a value of the first state variable, and updates the total energy based on the second local field according to a change in a value of the auxiliary variable.

6. The data processing apparatus (10) according to claim 5, wherein

the second change amount held in the storage unit (11) is represented by a smaller number of bits than a third number of bits used for representation of the constraint violation amount, and
the processing unit (12) updates the second change amount based on a code of a smaller number of bits than a number of bits of the second weight value that corresponds to the second weight value, and when the first local field is updated by using the second change amount, converts the second change amount into a value represented by the third number of bits.

7. A data processing method for a computer to execute a process comprising:

acquiring values of the plurality of state variables;
acquiring a first weight value between the plurality of state variables;
acquiring a second weight value between state variables of the plurality of state variables and the constraint condition;
acquiring a first local field that represents a first change amount of the total energy in a case where a value of each of the plurality of state variables changes;
acquiring a second local field that is used for determination of a constraint violation amount for the constraint condition;
repeating determining whether a change in a value of a first state variable among the plurality of state variables is allowed based on the first local field;
repeating, when the change in the value of the first state variable is allowed, updating the first local field based on the first weight value, updating the second local field based on the second weight value between the first state variable and the constraint condition, and updating the first local field based on a first quantized local field and a second quantized local field each obtained by quantizing the second local field before and after update;
searching for a combination of values of the plurality of state variables in which the value acquired by using the Ising-type evaluation function is local minimum or local maximum;
acquiring a first code of a second number of bits smaller than a first number of bits of the second local field that indicates the first quantized local field,
acquiring a second code of the second number of bits that indicates the second quantized local field,
acquiring an approximate value of the second local field before update based on the first code,
acquiring an approximate value of the second local field after update based on the second code, and
updating the first local field based on approximate values of the second local field before and after update.

8. The data processing method according to claim 7, wherein the one or more processors configured to in a case where the first quantized local field and the second quantized local field are same, omit update of the first local field based on the first quantized local field and the second quantized local field.

9. The data processing method according to claim 7, wherein the one or more processors configured to when the change in the value of the first state variable is allowed, update the first local field based on a difference between a change amount of the constraint term acquired by using an approximate value of the second local field before update that corresponds to the first quantized local field, and a change amount of the constraint term acquired by using an approximate value of the second local field after update that corresponds to the second quantized local field.

10. The data processing method according to claim 7, wherein the one or more processors configured to when the second local field is updated, correct the total energy based on the second local field before update, the second local field after update, the first quantized local field, and the second quantized local field.

11. The data processing method according to claim 7, wherein the one or more processors configured to:

acquire a second change amount of the constraint term according to the first quantized local field and the second quantized local field,
update the first local field and the second change amount based on the second weight value according to a change in a value of an auxiliary variable that indicates whether the constraint condition is satisfied for values of the plurality of state variables,
determine whether the change in the value of the first state variable is allowed, based on the first local field and the second change amount,
update the total energy based on the first local field according to the change in the value of the first state variable, and
update the total energy based on the second local field according to a change in a value of the auxiliary variable.

12. The data processing method according to claim 11, wherein

the second change amount held in the storage unit (11) is represented by a smaller number of bits than a third number of bits used for representation of the constraint violation amount,
wherein the one or more processors configured to:

update the second change amount based on a code of a smaller number of bits than a number of bits of the second weight value that corresponds to the second weight value, and
when the first local field is updated by using the second change amount, convert the second change amount into a value represented by the third number of bits.

13. A data processing program that causes a computer to execute a process, the process comprising:

acquiring values of the plurality of state variables;
acquiring a first weight value between the plurality of state variables;
acquiring a second weight value between state variables of the plurality of state variables and the constraint condition;
acquiring a first local field that represents a first change amount of the total energy in a case where a value of each of the plurality of state variables changes;
acquiring a second local field that is used for determination of a constraint violation amount for the constraint condition;
repeating determining whether a change in a value of a first state variable among the plurality of state variables is allowed based on the first local field;
repeating, when the change in the value of the first state variable is allowed, updating the first local field based on the first weight value, updating the second local field based on the second weight value between the first state variable and the constraint condition, and updating the first local field based on a first quantized local field and a second quantized local field each obtained by quantizing the second local field before and after update;
searching for a combination of values of the plurality of state variables in which the value acquired by using the Ising-type evaluation function is local minimum or local maximum
acquiring a first code of a second number of bits smaller than a first number of bits of the second local field that indicates the first quantized local field,
acquiring a second code of the second number of bits that indicates the second quantized local field,
acquiring an approximate value of the second local field before update based on the first code,
acquiring an approximate value of the second local field after update based on the second code, and
updating the first local field based on approximate values of the second local field before and after update.

**Patentansprüche**

1. Datenverarbeitungseinrichtung (10), die nach einer Kombination von Werten einer Vielzahl von Zustandsvariablen sucht, in der ein Wert, der unter Verwendung einer Ising-Typ-Bewertungsfunktion berechnet wird, die die Vielzahl von Zustandsvariablen einschließt, ein lokales Minimum oder ein lokales Maximum ist, die Datenverarbeitungseinrichtung umfassend:

eine Speichereinheit (11), die Folgendes speichert

Gesamtenergie, die eine Summe aus einem Randbedingungsterm, der einen Wert aufweist, der dem Vorhandensein oder Nichtvorhandensein einer Verletzung einer Randbedingung entspricht, und einem Wert der Bewertungsfunktion ist,
Werte der Vielzahl von Zustandsvariablen,
einen ersten Gewichtungswert zwischen der Vielzahl von Zustandsvariablen,
einen zweiten Gewichtungswert zwischen mindestens einigen Zustandsvariablen der Vielzahl von Zustandsvariablen und der Randbedingung,
ein erstes lokales Feld, das einen ersten Änderungsbetrag der Gesamtenergie in einem Fall darstellt, in dem sich ein Wert von jeder der Vielzahl von Zustandsvariablen ändert, und

ein zweites lokales Feld, das zur Bestimmung eines Randbedingungsverletzungsbetrags für die Randbedingung verwendet wird; und
eine Verarbeitungseinheit (12), die eine Verarbeitung des Bestimmens, ob eine Änderung eines Wertes einer ersten Zustandsvariablen unter der Vielzahl von Zustandsvariablen zulässig ist, auf der Grundlage des ersten lokalen Feldes wiederholt, und, wenn bestimmt wird, dass eine Änderung eines Wertes der ersten Zustandsvariablen zulässig ist, eine Verarbeitung des Aktualisierens des ersten lokalen Feldes auf der Grundlage des ersten Gewichtungswertes, des Aktualisierens des zweiten lokalen Feldes auf der Grundlage des zweiten Gewichtungswertes zwischen der ersten Zustandsvariablen und der Randbedingung, und weiter des Aktualisierens des ersten lokalen Feldes auf der Grundlage eines ersten quantisierten lokalen Feldes und eines zweiten quantisierten lokalen Feldes, die jeweils durch Quantisieren des zweiten lokalen Feldes vor und nach der Aktualisierung erhalten werden, wiederholt, wobei
die Verarbeitungseinheit (12) einen ersten arithmetischen Operator, der das erste lokale Feld aktualisiert, und einen zweiten arithmetischen Operator, der das zweite lokale Feld aktualisiert, einschließt,
der zweite arithmetische Operator einen ersten Code einer zweiten Anzahl von Bits, die kleiner ist als eine erste Anzahl von Bits des zweiten lokalen Feldes, der das erste quantisierte lokale Feld angibt, und einen zweiten Code der zweiten Anzahl von Bits, der das zweite quantisierte lokale Feld angibt, an den ersten arithmetischen Operator ausgibt, und
der erste arithmetische Operator einen Näherungswert des zweiten lokalen Feldes vor der Aktualisierung auf der Grundlage des ersten Codes erlangt, einen Näherungswert des zweiten lokalen Feldes nach der Aktualisierung auf der Grundlage des zweiten Codes erlangt und das erste lokale Feld auf der Grundlage der Näherungswerte des zweiten lokalen Feldes vor und nach der Aktualisierung aktualisiert.

2. Datenverarbeitungseinrichtung (10) nach Anspruch 1, wobei
in einem Fall, in dem das erste quantisierte lokale Feld und das zweite quantisierte lokale Feld gleich sind, die Verarbeitungseinheit (12) die Aktualisierung des ersten lokalen Feldes auf der Grundlage des ersten quantisierten lokalen Feldes und des zweiten quantisierten lokalen Feldes unterlässt.

3. Datenverarbeitungseinrichtung (10) nach Anspruch 1, wobei
wenn bestimmt wird, dass eine Änderung eines Wertes der ersten Zustandsvariablen zulässig ist, die Verarbeitungseinheit (12) das erste lokale Feld auf der Grundlage einer Differenz zwischen einem Änderungsbetrag des Randbedingungsterms, der unter Verwendung eines Näherungswertes des zweiten lokalen Feldes vor der Aktualisierung, der dem ersten quantisierten lokalen Feld entspricht, berechnet wird, und eines Änderungsbetrags des Randbedingungsterms, der unter Verwendung eines Näherungswertes des zweiten lokalen Feldes nach der Aktualisierung, der dem zweiten quantisierten lokalen Feld entspricht, berechnet wird, aktualisiert.

4. Datenverarbeitungseinrichtung (10) nach Anspruch 1, wobei
wenn das zweite lokale Feld aktualisiert wird, die Verarbeitungseinheit (12) die Gesamtenergie auf der Grundlage des zweiten lokalen Feldes vor der Aktualisierung, des zweiten lokalen Feldes nach der Aktualisierung, des ersten quantisierten lokalen Feldes und des zweiten quantisierten lokalen Feldes korrigiert.

5. Datenverarbeitungseinrichtung (10) nach Anspruch 1, wobei

die Verarbeitungseinheit (12)
in der Speichereinheit (11) das erste lokale Feld und einen zweiten Änderungsbetrag des Randbedingungsterms entsprechend dem ersten quantisierten lokalen Feld und dem zweiten quantisierten lokalen Feld einzeln speichert,
das erste lokale Feld und den zweiten Änderungsbetrag auf der Grundlage des zweiten Gewichtungswertes entsprechend einer Änderung eines Wertes einer Hilfsvariablen aktualisiert, die angibt, ob die Randbedingung für Werte der Mehrzahl von Zustandsvariablen erfüllt ist,
auf der Grundlage des ersten lokalen Feldes und des zweiten Änderungsbetrags bestimmt, ob eine Änderung eines Wertes der ersten Zustandsvariablen zulässig ist, und
die Gesamtenergie auf der Grundlage des ersten lokalen Feldes entsprechend einer Änderung eines Wertes der ersten Zustandsvariablen aktualisiert, und die Gesamtenergie auf der Grundlage des zweiten lokalen Feldes entsprechend einer Änderung eines Wertes der Hilfsvariablen aktualisiert.

6. Datenverarbeitungseinrichtung (10) nach Anspruch 5, wobei

der zweite Änderungsbetrag, der in der Speichereinheit (11) gehalten wird, durch eine kleinere Anzahl von Bits als eine dritte Anzahl von Bits, die zur Darstellung des Randbedingungsverletzungsbetrags verwendet wird, dargestellt wird, und
die Verarbeitungseinheit (12) den zweiten Änderungsbetrag auf der Grundlage eines Codes einer kleineren Anzahl von Bits als einer Anzahl von Bits des zweiten Gewichtungswertes, die dem zweiten Gewichtungswert entspricht, aktualisiert und, wenn das erste lokale Feld unter Verwendung des zweiten Änderungsbetrages aktualisiert wird, den zweiten Änderungsbetrag in einen durch die dritte Anzahl von Bits dargestellten Wert umwandelt.

7. Datenverarbeitungsverfahren für einen Computer zum Ausführen eines Prozesses, umfassend:

Erlangen von Werten der Vielzahl von Zustandsvariablen;
Erlangen eines ersten Gewichtungswertes zwischen der Vielzahl von Zustandsvariablen;
Erlangen eines zweiten Gewichtungswertes zwischen Zustandsvariablen der Vielzahl von Zustandsvariablen und der Randbedingung;
Erlangen eines ersten lokalen Feldes, das einen ersten Änderungsbetrag der Gesamtenergie in einem Fall darstellt, in dem sich ein Wert von jeder der Vielzahl von Zustandsvariablen ändert;
Erlangen eines zweiten lokalen Feldes, das zur Bestimmung eines Randbedingungsverletzungsbetrags für die Randbedingung verwendet wird;
Wiederholen des Bestimmens, ob eine Änderung eines Wertes einer ersten Zustandsvariablen unter der Vielzahl von Zustandsvariablen zulässig ist, auf der Grundlage des ersten lokalen Feldes;
Wiederholen, wenn die Änderung des Wertes der ersten Zustandsvariablen zulässig ist, des Aktualisierens des ersten lokalen Feldes auf der Grundlage des ersten Gewichtungswertes, des Aktualisierens des zweiten lokalen Feldes auf der Grundlage des zweiten Gewichtungswertes zwischen der ersten Zustandsvariablen und der Randbedingung, des Aktualisierens des ersten lokalen Feldes auf der Grundlage eines ersten quantisierten lokalen Feldes und eines zweiten quantisierten lokalen Feldes, die jeweils durch Quantisieren des zweiten lokalen Feldes vor und nach der Aktualisierung erhalten werden;
Suchen nach einer Kombination von Werten einer Vielzahl von Zustandsvariablen, in der der Wert, der unter Verwendung einer Ising-Typ-Bewertungsfunktion erlangt wird, ein lokales Minimum oder ein lokales Maximum ist;
Erlangen eines ersten Codes einer zweiten Anzahl von Bits, die kleiner ist als eine erste Anzahl von Bits des zweiten lokalen Feldes, der das erste quantisierte lokale Feld angibt,
Erlangen eines zweiten Codes der zweiten Anzahl von Bits, der das zweite quantisierte lokale Feld angibt,

Erlangen eines Näherungswertes des zweiten lokalen Feldes vor der Aktualisierung auf der Grundlage des ersten Codes,

Erlangen eines Näherungswertes des zweiten lokalen Feldes nach der Aktualisierung auf der Grundlage des zweiten Codes, und

Aktualisieren des ersten lokalen Feldes auf der Grundlage von Näherungswerten des zweiten lokalen Feldes vor und nach der Aktualisierung.

8. Datenverarbeitungsverfahren nach Anspruch 7, wobei der eine oder die mehreren Prozessoren dazu konfiguriert sind,

in einem Fall, in dem das erste quantisierte lokale Feld und das zweite quantisierte lokale Feld gleich sind, die Aktualisierung des ersten lokalen Feldes auf der Grundlage des ersten quantisierten lokalen Feldes und des zweiten quantisierten lokalen Feldes zu unterlassen.

9. Datenverarbeitungsverfahren nach Anspruch 7, wobei der eine oder die mehreren Prozessoren dazu konfiguriert sind,

wenn eine Änderung des Wertes der ersten Zustandsvariablen zulässig ist, das erste lokale Feld auf der Grundlage einer Differenz zwischen einem Änderungsbetrag des Randbedingungsterms, der unter Verwendung eines Näherungswertes des zweiten lokalen Feldes vor der Aktualisierung, der dem ersten quantisierten lokalen Feld entspricht, erlangt wird, und einem Änderungsbetrag des Randbedingungsterms, der unter Verwendung eines Näherungswertes des zweiten lokalen Feldes nach der Aktualisierung, der dem zweiten quantisierten lokalen Feld entspricht, erlangt wird, zu aktualisieren.

10. Datenverarbeitungsverfahren nach Anspruch 7, wobei der eine oder die mehreren Prozessoren dazu konfiguriert sind, um

wenn das zweite lokale Feld aktualisiert wird, die Gesamtenergie auf der Grundlage des zweiten lokalen Feldes vor der Aktualisierung, des zweiten lokalen Feldes nach der Aktualisierung, des ersten quantisierten lokalen Feldes und des zweiten quantisierten lokalen Feldes zu korrigieren.

11. Datenverarbeitungsverfahren nach Anspruch 7, wobei der eine oder die mehreren Prozessoren konfiguriert sind zum:

Erlangen eines zweiten Änderungsbetrags des Randbedingungsterms entsprechend dem ersten quantisierten lokalen Feld und dem zweiten quantisierten lokalen Feld,

Aktualisieren des ersten lokalen Feldes und des zweiten Änderungsbetrags auf der Grundlage des zweiten Gewichtungswertes entsprechend einer Änderung eines Wertes einer Hilfsvariablen, die angibt, ob die Randbedingung für Werte der Mehrzahl von Zustandsvariablen erfüllt ist,

Bestimmen, ob eine Änderung eines Wertes der ersten Zustandsvariablen zulässig ist, auf der Grundlage des ersten lokalen Feldes und des zweiten Änderungsbetrags,

Aktualisieren der Gesamtenergie auf der Grundlage des ersten lokalen Feldes entsprechend der Änderung des Wertes der ersten Zustandsvariablen, und

Aktualisieren der Gesamtenergie auf der Grundlage des zweiten lokalen Feldes entsprechend einer Änderung eines Wertes der Hilfsvariablen.

12. Datenverarbeitungsverfahren nach Anspruch 11, wobei

der zweite Änderungsbetrag, der in der Speichereinheit (11) gehalten wird, durch eine kleinere Anzahl von Bits als eine dritte Anzahl von Bits, die zur Darstellung des Randbedingungsverletzungsbetrags verwendet wird, dargestellt wird,

wobei der eine oder die mehreren Prozessoren konfiguriert sind zum:

Aktualisieren des zweiten Änderungsbetrags auf der Grundlage eines Codes einer kleineren Anzahl von Bits als einer Anzahl von Bits des zweiten Gewichtungswertes, die dem zweiten Gewichtungswert entspricht, und

wenn das erste lokale Feld unter Verwendung des zweiten Änderungsbetrages aktualisiert wird, Umwandeln des zweiten Änderungsbetrags in einen durch die dritte Anzahl von Bits dargestellten Wert.

13. Datenverarbeitungsprogramm, das einen Computer veranlasst, einen Prozess auszuführen, der Prozess umfassend:

Erlangen von Werten der Vielzahl von Zustandsvariablen;

Erlangen eines ersten Gewichtungswertes zwischen der Vielzahl von Zustandsvariablen;

Erlangen eines zweiten Gewichtungswertes zwischen Zustandsvariablen der Vielzahl von Zustandsvariablen und der Randbedingung;

Erlangen eines ersten lokalen Feldes, das einen ersten Änderungsbetrag der Gesamtenergie in einem Fall darstellt, in dem sich ein Wert von jeder der Vielzahl von Zustandsvariablen ändert;

Erlangen eines zweiten lokalen Feldes, das zur Bestimmung eines Randbedingungsverletzungsbetrags für die Randbedingung verwendet wird;

Wiederholen des Bestimmens, ob eine Änderung eines Wertes einer ersten Zustandsvariablen unter der Vielzahl von Zustandsvariablen zulässig ist, auf der Grundlage des ersten lokalen Feldes;

Wiederholen, wenn die Änderung des Wertes der ersten Zustandsvariablen zulässig ist, des Aktualisierens des ersten lokalen Feldes auf der Grundlage des ersten Gewichtungswertes, des Aktualisierens des zweiten lokalen Feldes auf der Grundlage des zweiten Gewichtungswertes zwischen der ersten Zustandsvariablen und der Randbedingung, und Aktualisieren des ersten lokalen Feldes auf der Grundlage eines ersten quantisierten lokalen Feldes und eines zweiten quantisierten lokalen Feldes, die jeweils durch Quantisieren des zweiten lokalen Feldes vor und nach der Aktualisierung erhalten werden;

Suchen nach einer Kombination von Werten einer Vielzahl von Zustandsvariablen, in der der Wert, der unter Verwendung einer Ising-Typ-Bewertungsfunktion erlangt wird, ein lokales Minimum oder ein lokales Maximum ist

Erlangen eines ersten Codes einer zweiten Anzahl von Bits, die kleiner ist als eine erste Anzahl von Bits des zweiten lokalen Feldes, der das erste quantisierte lokale Feld angibt,

Erlangen eines zweiten Codes der zweiten Anzahl von Bits, der das zweite quantisierte lokale Feld angibt,

Erlangen eines Näherungswertes des zweiten lokalen Feldes vor der Aktualisierung auf der Grundlage des ersten Codes,

Erlangen eines Näherungswertes des zweiten lokalen Feldes nach der Aktualisierung auf der Grundlage des zweiten Codes, und

Aktualisieren des ersten lokalen Feldes auf der Grundlage von Näherungswerten des zweiten lokalen Feldes vor und nach der Aktualisierung.

## Revendications

1. Appareil (10) de traitement de données qui recherche une combinaison de valeurs d'une pluralité de variables d'état dans laquelle une valeur calculée en utilisant une fonction d'évaluation de type Ising qui inclut la pluralité de variables d'état est un minimum local ou un maximum local, l'appareil de traitement de données comprenant :

une unité (11) de stockage qui stocke

une énergie totale, qui est une somme d'un terme de contrainte présentant une valeur qui correspond à la présence ou à l'absence de violation d'une condition de contrainte et d'une valeur de la fonction d'évaluation, des valeurs de la pluralité de variables d'état,

une première valeur de pondération entre la pluralité de variables d'état,

une seconde valeur de pondération entre au moins certaines variables d'état de la pluralité de variables d'état et la condition de contrainte,

un premier champ local qui représente une première quantité de changement de l'énergie totale dans un cas où une valeur de chacune de la pluralité de variables d'état change, et

un second champ local qui est utilisé pour la détermination d'une quantité de violation de contrainte pour la condition de contrainte ; et

une unité (12) de traitement qui répète un traitement consistant à déterminer si un changement d'une valeur d'une première variable d'état parmi la pluralité de variables d'état est autorisé sur la base du premier champ local, et un traitement, lorsqu'il est déterminé qu'un changement d'une valeur de la première variable d'état est autorisé, consistant à mettre à jour le premier champ local sur la base de la première valeur de pondération, mettre à jour le second champ local sur la base de la seconde valeur de pondération entre la première variable d'état et la condition de contrainte, et en outre mettre à jour le premier champ local sur la base d'un premier champ local quantifié et d'un second champ local quantifié, obtenus chacun par la quantification du second champ local avant et après la mise à jour, dans lequel

l'unité (12) de traitement inclut un premier opérateur arithmétique qui met à jour le premier champ local et un second opérateur arithmétique qui met à jour le second champ local,

le second opérateur arithmétique délivre, au premier opérateur arithmétique, un premier code d'un deuxième nombre de bits inférieur à un premier nombre de bits du second champ local qui indique le premier champ local quantifié, et un second code du deuxième nombre de bits qui indique le second champ local quantifié, et le premier opérateur arithmétique acquiert une valeur approchée du second champ local avant la mise à jour sur la base du premier code, acquiert une valeur approchée du second champ local après la mise à jour sur la base du second code, et met à jour le premier champ local sur la base de valeurs approchées du second champ local avant et après la mise à jour.

2. Appareil (10) de traitement de données selon la revendication 1, dans lequel
dans un cas où le premier champ local quantifié et le second champ local quantifié sont identiques, l'unité (12) de traitement omet la mise à jour du premier champ local sur la base du premier champ local quantifié et du second champ local quantifié.

3. Appareil (10) de traitement de données selon la revendication 1, dans lequel
lorsqu'il est déterminé qu'un changement d'une valeur de la première variable d'état est autorisé, l'unité (12) de traitement met à jour le premier champ local sur la base d'une différence entre une quantité de changement du terme de contrainte calculée en utilisant une valeur approchée du second champ local avant la mise à jour qui correspond au premier champ local quantifié, et une quantité de changement du terme de contrainte calculée en utilisant une valeur approchée du second champ local après la mise à jour qui correspond au second champ local quantifié.

4. Appareil (10) de traitement de données selon la revendication 1, dans lequel
lorsque le second champ local est mis à jour, l'unité (12) de traitement corrige l'énergie totale sur la base du second champ local avant la mise à jour, du second champ local après la mise à jour, du premier champ local quantifié et du second champ local quantifié.

5. Appareil (10) de traitement de données selon la revendication 1, dans lequel

l'unité (12) de traitement
stocke individuellement, dans l'unité (11) de stockage, le premier champ local et une seconde quantité de changement du terme de contrainte en fonction du premier champ local quantifié et du second champ local quantifié,
met à jour le premier champ local et la seconde quantité de changement sur la base de la seconde valeur de pondération en fonction d'un changement d'une valeur d'une variable auxiliaire qui indique si la condition de contrainte est satisfaite pour des valeurs de la pluralité de variables d'état,
détermine si un changement d'une valeur de la première variable d'état est autorisé, sur la base du premier champ local et de la seconde quantité de changement, et
met à jour l'énergie totale sur la base du premier champ local en fonction d'un changement d'une valeur de la première variable d'état, et met à jour l'énergie totale sur la base du second champ local en fonction d'un changement d'une valeur de la variable auxiliaire.

6. Appareil (10) de traitement de données selon la revendication 5, dans lequel

la seconde quantité de changement contenue dans l'unité (11) de stockage est représentée par un nombre de bits inférieur à un troisième nombre de bits utilisés pour représenter la quantité de violation de contrainte, et
l'unité (12) de traitement met à jour la seconde quantité de changement sur la base d'un code d'un nombre de bits inférieur à un nombre de bits de la seconde valeur de pondération qui correspond à la seconde valeur de pondération, et lorsque le premier champ local est mis à jour en utilisant la seconde quantité de changement, convertit la seconde quantité de changement en une valeur représentée par le troisième nombre de bits.

7. Procédé de traitement de données pour amener un ordinateur à exécuter un processus comprenant : l'acquisition de valeurs de la pluralité de variables d'état ;

l'acquisition d'une première valeur de pondération entre la pluralité de variables d'état ;
l'acquisition d'une seconde valeur de pondération entre des variables d'état de la pluralité de variables d'état et la condition de contrainte ;
l'acquisition d'un premier champ local qui représente une première quantité de changement de l'énergie totale dans le cas où une valeur de chacune de la pluralité de variables d'état change ;
l'acquisition d'un second champ local qui est utilisé pour la détermination d'une quantité de violation de contrainte pour la condition de contrainte ;

la répétition de la détermination visant à établir si un changement d'une valeur d'une première variable d'état parmi la pluralité de variables d'état est autorisé sur la base du premier champ local ;

la répétition, lorsque le changement de la valeur de la première variable d'état est autorisé, de la mise à jour du premier champ local sur la base de la première valeur de pondération, de la mise à jour du second champ local sur la base de la seconde valeur de pondération entre la première variable d'état et la condition de contrainte, et de la mise à jour du premier champ local sur la base d'un premier champ local quantifié et d'un second champ local quantifié, obtenus chacun par la quantification du second champ local avant et après la mise à jour ;

la recherche d'une combinaison de valeurs de la pluralité de variables d'état dans laquelle la valeur acquise en utilisant la fonction d'évaluation de type Ising est un minimum local ou un maximum local ;

l'acquisition d'un premier code d'un deuxième nombre de bits inférieur à un premier nombre de bits du second champ local qui indique le premier champ local quantifié,

l'acquisition d'un second code du deuxième nombre de bits qui indique le second champ local quantifié,

l'acquisition d'une valeur approchée du second champ local avant la mise à jour sur la base du premier code,

l'acquisition d'une valeur approchée du second champ local après la mise à jour sur la base du second code, et

la mise à jour du premier champ local sur la base de valeurs approchées du second champ local avant et après la mise à jour.

8. Procédé de traitement de données selon la revendication 7, dans lequel les un ou plusieurs processeurs sont configurés pour

dans un cas où le premier champ local quantifié et le second champ local quantifié sont identiques, omettre la mise à jour du premier champ local sur la base du premier champ local quantifié et du second champ local quantifié.

9. Procédé de traitement de données selon la revendication 7, dans lequel les un ou plusieurs processeurs sont configurés pour

lorsque le changement de la valeur de la première variable d'état est autorisé, mettre à jour le premier champ local sur la base d'une différence entre une quantité de changement du terme de contrainte acquise en utilisant une valeur approchée du second champ local avant la mise à jour qui correspond au premier champ local quantifié, et une quantité de changement du terme de contrainte acquise en utilisant une valeur approchée du second champ local après la mise à jour qui correspond au second champ local quantifié.

10. Procédé de traitement de données selon la revendication 7, dans lequel les un ou plusieurs processeurs sont configurés pour

lorsque le second champ local est mis à jour, corriger l'énergie totale sur la base du second champ local avant la mise à jour, du second champ local après la mise à jour, du premier champ local quantifié et du second champ local quantifié.

11. Procédé de traitement de données selon la revendication 7, dans lequel les un ou plusieurs processeurs sont configurés pour :

acquérir une seconde quantité de changement du terme de contrainte en fonction du premier champ local quantifié et du second champ local quantifié,

mettre à jour le premier champ local et la seconde quantité de changement sur la base de la seconde valeur de pondération en fonction d'un changement d'une valeur d'une variable auxiliaire qui indique si la condition de contrainte est satisfaite pour des valeurs de la pluralité de variables d'état,

déterminer si le changement de la valeur de la première variable d'état est autorisé, sur la base du premier champ local et de la seconde quantité de changement, et

mettre à jour l'énergie totale sur la base du premier champ local en fonction du changement de la valeur de la première variable d'état, et

mettre à jour l'énergie totale sur la base du second champ local en fonction d'un changement d'une valeur de la variable auxiliaire.

12. Procédé de traitement de données selon la revendication 11, dans lequel

la seconde quantité de changement contenue dans l'unité (11) de stockage est représentée par un nombre de bits inférieur à un troisième nombre de bits utilisés pour représenter la quantité de violation de contrainte,

dans lequel les un ou plusieurs processeurs sont configurés pour :

mettre à jour la seconde quantité de changement sur la base d'un code d'un nombre de bits inférieur à un nombre de bits de la seconde valeur de pondération qui correspond à la seconde valeur de pondération, et lorsque le premier champ local est mis à jour en utilisant la seconde quantité de changement, convertir la seconde quantité de changement en une valeur représentée par le troisième nombre de bits.

13. Programme de traitement de données qui amène un ordinateur à exécuter un processus, le processus comprenant :

l'acquisition de valeurs de la pluralité de variables d'état ;
l'acquisition d'une première valeur de pondération entre la pluralité de variables d'état ;
l'acquisition d'une seconde valeur de pondération entre des variables d'état de la pluralité de variables d'état et la condition de contrainte ;
l'acquisition d'un premier champ local qui représente une première quantité de changement de l'énergie totale dans le cas où une valeur de chacune de la pluralité de variables d'état change ;
l'acquisition d'un second champ local qui est utilisé pour la détermination d'une quantité de violation de contrainte pour la condition de contrainte ;
la répétition de la détermination visant à établir si un changement d'une valeur d'une première variable d'état parmi la pluralité de variables d'état est autorisé sur la base du premier champ local ;
la répétition, lorsque le changement de la valeur de la première variable d'état est autorisé, de la mise à jour du premier champ local sur la base de la première valeur de pondération, de la mise à jour du second champ local sur la base de la seconde valeur de pondération entre la première variable d'état et la condition de contrainte, et de la mise à jour du premier champ local sur la base d'un premier champ local quantifié et d'un second champ local quantifié, obtenus chacun par la quantification du second champ local avant et après la mise à jour ;
la recherche d'une combinaison de valeurs de la pluralité de variables d'état dans laquelle la valeur acquise en utilisant la fonction d'évaluation de type Ising est un minimum local ou un maximum local
l'acquisition d'un premier code d'un deuxième nombre de bits inférieur à un premier nombre de bits du second champ local qui indique le premier champ local quantifié,
l'acquisition d'un second code du deuxième nombre de bits qui indique le second champ local quantifié,
l'acquisition d'une valeur approchée du second champ local avant la mise à jour sur la base du premier code,
l'acquisition d'une valeur approchée du second champ local après la mise à jour sur la base du second code, et
la mise à jour du premier champ local sur la base de valeurs approchées du second champ local avant et après la mise à jour.

# FIG. 1

```
┌─────────────────────────────────────────┐
│  ┌──────────────────────────────┐        │
│  │    ↓                          │        │
│  │  ┌─────────────────────┐  S1  │        │
│  │  │ SELECT STATE VARIABLE│      │        │
│  │  │   OF FLIP CANDIDATE  │      │        │
│  │  └─────────────────────┘      │        │
│  │    ↓                 S2        │        │
│  │  ┌─────────────────────┐      │        │
│  │  │    CALCULATE ΔH      │      │        │
│  │  └─────────────────────┘      │        │
│  │    ↓                 S3        │        │
│  │  ┌─────────────────────┐      │        │
│  │  │  FLIP DETERMINATION │      │        │
│  │  └─────────────────────┘      │        │
│  │    ↓                 S4        │        │
│  │  ┌─────────────────────┐      │        │
│  │  │ UPDATE PROCESSING...│      │        │
│  │  └─────────────────────┘      │        │
│  │    ↓                 S5        │        │
│  │  ┌─────────────────────┐      │        │
│  │  │ UPDATE PROCESSING...│      │        │
│  │  └─────────────────────┘      │        │
│  └──────────────────────────────┘        │
└─────────────────────────────────────────┘
```

S1 — SELECT STATE VARIABLE OF FLIP CANDIDATE

S2 — CALCULATE ΔH

S3 — FLIP DETERMINATION

S4 — UPDATE PROCESSING OF FIRST AND SECOND LOCAL FIELDS ACCORDING TO FLIPPING OF STATE VARIABLE

S5 — UPDATE PROCESSING BASED ON SECOND LOCAL FIELD AFTER QUANTIZATION

10 — DATA PROCESSING APPARATUS

11 — STORAGE UNIT

12 — PROCESSING UNIT

# FIG. 2

$$g(h_k)=\max[0,h_k]$$

20

1

0          1          $h_k$

# FIG. 3

| $x_k$ | $h_k$ | $\langle h_k \rangle_\delta$ |
|-------|-------|------------------------------|
| 000 | $-\delta/2 \leq h_k < \delta/2$ | 0 |
| 001 | $\delta/2 \leq h_k < 3\delta/2$ | $\delta$ |
| 010 | $-3\delta/2 \leq h_k < 5\delta/2$ | $2\delta$ |
| 011 | $5\delta/2 \leq h_k$ | $3\delta$ |
| 100 | $h_k < -7\delta/2$ | $-4\delta$ |
| 101 | $-7\delta/2 \leq h_k < -5\delta/2$ | $-3\delta$ |
| 110 | $-5\delta/2 \leq h_k < -3\delta/2$ | $-2\delta$ |
| 111 | $-3\delta/2 \leq h_k < -\delta/2$ | $-\delta$ |

# FIG. 4

| $x_k$ | $h_k$ | $\hat{h}_k$ |
|---|---|---|
| **1** | $h_k > 0$ | $\delta/2$ |
| **0** | $h_k \leq 0$ | $-\delta/2$ |

# FIG. 5

## FIG. 6

# FIG. 7

# FIG. 8

# FIG. 9

FIG. 10

# FIG. 11

START

INITIALIZATION — S10

DECISION VARIABLE FLIP SELECTION PROCESSING — S11

AUXILIARY VARIABLE LOOP
k = 0 ; k < M ; k++ — S12

IS THERE LOCAL FIELD UPDATE OF AUXILIARY VARIABLE? — S13
NO

YES

CORRECTION OF TOTAL ENERGY H — S14

CALCULATE QUANTIZED LOCAL FIELDS OF AUXILIARY VARIABLE — S15

IS THERE CHANGE IN QUANTIZED LOCAL FIELD? — S16
NO

YES

UPDATE OF DECISION VARIABLE LOCAL FIELD (CONTRIBUTION OF PENALTY FROM AUXILIARY VARIABLE) — S17

AUXILIARY VARIABLE LOOP — S18

IS IT SEARCH END? — S19
NO

YES

END

# FIG. 12

START DECISION VARIABLE
FLIP SELECTION PROCESSING

S20
CALCULATE ΔE OF DECISION VARIABLE

S21
BIT ACCEPTANCE DETERMINATION OF
DECISION VARIABLE

S22
FLIP BIT SELECTION OF DECISION VARIABLE

S23
MAY BIT-FLIPPING BE PERFORMED?

YES                    NO

S24
UPDATE OF DECISION VARIABLE

S25
UPDATE TOTAL ENERGY H

S26
LOCAL FIELD UPDATE OF DECISION
VARIABLE/AUXILIARY VARIABLE

END

## FIG. 13

130a

100a

140

DECISION VARIABLE PROCESSING UNIT

131

131a

AUXILIARY VARIABLE PROCESSING UNIT

141

141a

W HOLDING UNIT

W HOLDING UNIT  ...

W HOLDING UNIT

W HOLDING UNIT  ...

134

142

SRAM I/F

134a

SRAM I/F

142a

$\lambda$, W    $\lambda$, W

171

W       W

181

RESTORATION UNIT

Flip Bit

175

DECISION VARIABLE MODULE  ...

AUXILIARY VARIABLE MODULE  ...

176a

176

$h_{ij}$ CALCULATION UNIT

$h_{ik}$ CALCULATION UNIT

182a

h STORAGE UNIT

h STORAGE UNIT

177

173

182    182a    183

$\Delta E$ CALCULATION UNIT

$\Delta E$

177a

135

143

Flip Bit

hk_code/hk_old_code
hk^_update_bit

CONSTRAINT TERM CALCULATION UNIT

160a

ENERGY HOLDING UNIT

150

# FIG. 14

# FIG. 15

## FIG. 16

# FIG. 17

## FIG. 18

# FIG. 19

# FIG. 20

# FIG. 21

<PREDICTION ERROR OCCURRENCE CASE 1>

CONSTRAINT
TERM

$\lambda_k \max[0, h_k]$

PREDICTION ERROR

$h_k$

<PREDICTION ERROR OCCURRENCE CASE 2>

CONSTRAINT
TERM

$\lambda_k \max[0, h_k]$

PREDICTION ERROR

$h_k$

# FIG. 22

# FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020204928 A
- JP 2020113190 A
- US 20150205759
- US 20190354842
- EP 3757908 A1

**Non-patent literature cited in the description**

- **KOTARO TANAHASHI et al.** Application of Ising Machines and a Software Development for Ising Machines. *JOURNAL OF THE PHYSICAL SOCIETY OF JAPAN*, 20 May 2019, vol. 88 (6)